(19) Europäisches Patentamt
European Patent Office
Office européen des brevets

(11) **EP 4 615 106 A1**

(12) **EUROPEAN PATENT APPLICATION**
published in accordance with Art. 153(4) EPC

(43) Date of publication:
**10.09.2025 Bulletin 2025/37**

(21) Application number: **23885017.6**

(22) Date of filing: **02.11.2023**

(51) International Patent Classification (IPC):
***H04W 72/0453*** (2023.01)

(52) Cooperative Patent Classification (CPC):
**H04W 72/0453; H04W 72/23**

(86) International application number:
**PCT/CN2023/129189**

(87) International publication number:
**WO 2024/094091 (10.05.2024 Gazette 2024/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.11.2022 CN 202211377097
17.02.2023 CN 202310189176**

(71) Applicant: **Huawei Technologies Co., Ltd.
Shenzhen, Guangdong 518129 (CN)**

(72) Inventors:
• **LU, Shaozhong
Shenzhen, Guangdong 518129 (CN)**
• **GUO, Zhiheng
Shenzhen, Guangdong 518129 (CN)**
• **SONG, Xinghua
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **SUBBAND CONFIGURATION METHOD AND COMMUNICATION APPARATUS**

(57) A subband configuration method and a communication apparatus are provided. In the method, a first subband pattern is applied only to a first frequency domain resource in a first time unit set, and a flexible frequency unit that is capable of being used for both uplink transmission and downlink transmission is introduced in the first frequency domain resource through the first subband pattern, so that a terminal device can adaptively use the flexible frequency unit for uplink transmission and downlink transmission in the first time unit set based on statuses of an uplink service and a downlink service, thereby improving flexibility of an SBFD system and utilization of frequency domain resources.

[FIG. 4]

**Description**

This application claims priorities to Chinese Patent Application No. 202211377097.9, filed with the China National Intellectual Property Administration on November 4, 2022, and entitled "SUBBAND CONFIGURATION METHOD AND COMMUNICATION APPARATUS", and to Chinese Patent Application No. 202310189176.5, filed with the China National Intellectual Property Administration on February 17, 2023, and entitled "SUBBAND CONFIGURATION METHOD AND COMMUNICATION APPARATUS", which are incorporated herein by reference in their entireties.

TECHNICAL FIELD

Embodiments of this application relate to the communication field, and more specifically, to a subband configuration method and a communication apparatus.

BACKGROUND

With rapid development of new radio (new radio, NR) in a fifth generation mobile communication technology, various communication requirements emerge. To meet requirements of emerging services, a subband full duplex (subband non-overlapping full duplex, SBFD) solution is proposed to improve uplink coverage of a time division duplex (time division duplex, TDD) system. Subband full duplex means that in the TDD system, a network device can perform both receiving and sending in one slot or one orthogonal frequency division multiplexing (orthogonal frequency division multiplexing, OFDM) symbol by using different subbands for uplink transmission and downlink transmission.

Currently, an SBFD subband is semi-statically configured, and locations of time frequency resources used for uplink transmission and downlink transmission in one slot or one symbol are fixed. Consequently, flexibility of an SBFD system is poor. For example, when there are a large quantity of downlink services and a small quantity of uplink services, uplink subband resources are seriously wasted, and downlink resources cannot support the heavy downlink services. On the contrary, when there are a large quantity of uplink services and a small quantity of downlink services, downlink subband resources are seriously wasted, and uplink resources cannot support the heavy uplink services.

SUMMARY

Embodiments of this application provide a subband configuration method and a communication apparatus, to improve flexibility of an SBFD system, and further improve utilization of frequency domain resources.

According to a first aspect, a communication method is provided. The method may be performed by a terminal device, or may be performed by a component (for example, a chip or a circuit) of the terminal device. This is not limited herein. For ease of description, the following uses an example in which the method is performed by the terminal device for description.

The method may include: The terminal device receives first signaling and second signaling from a network device, where the first signaling indicates a first time unit set, the second signaling indicates a first subband pattern, the first subband pattern indicates a transmission direction of a frequency unit included in a first frequency domain resource, and the first frequency domain resource includes one or more flexible frequency units, where the flexible frequency units are capable of being used for both uplink transmission and downlink transmission, and the first frequency domain resource is a frequency unit set configured by the network device for the terminal device; and the terminal device determines a transmission direction of a first time frequency resource based on the first subband pattern, where the first time frequency resource is a time frequency resource including one frequency unit in the first frequency domain resource and a first time unit, and the first time unit is any time unit in the first time unit set.

In the foregoing technical solution, the first subband pattern is applied only to the first frequency domain resource in the first time unit set, and the flexible frequency unit that is capable of being used for both uplink transmission and downlink transmission is introduced in the first frequency domain resource through the first subband pattern, so that the terminal device can adaptively use the flexible frequency unit for the uplink transmission and the downlink transmission in the first time unit set based on statuses of an uplink service and a downlink service, to improve the flexibility of the SBFD system and the utilization of the frequency domain resource.

In some implementations of the first aspect, the method further includes: The terminal device determines a transmission direction of a second time frequency resource based on a transmission direction of a second time unit, where the second time frequency resource is a time frequency resource including one frequency unit in the first frequency domain resource and the second time unit, and the second time unit is any time unit outside the first time unit set.

In the foregoing technical solution, the first subband pattern is not applied to the time unit outside the first time unit set, and the time unit outside the first time unit set determines, based on a transmission direction of each time unit, a transmission direction of a time frequency resource corresponding to the time unit.

In some implementations of the first aspect, the first subband pattern indicates that all frequency units in the first frequency domain resource are flexible frequency units; the first subband pattern indicates that the first frequency domain resource includes at most one downlink subband, one flexible subband, and one uplink subband, where the downlink subband is located at a start location of the first frequency domain resource, the uplink subband is located at an end location of the first frequency domain resource, and the flexible subband is located between the downlink subband and the uplink subband; the first subband pattern indicates that the first frequency domain resource includes at most one uplink subband, one flexible subband, and one downlink subband, where the uplink subband is located at a start location of the first frequency domain resource, the downlink subband is located at an end location of the first frequency domain resource, and the flexible subband is located between the downlink subband and the uplink subband; or the first subband pattern indicates that the first frequency domain resource includes at most a first downlink subband, a first flexible subband, a first uplink subband, a second flexible subband, and a second downlink subband, where the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband, where all frequency units in an uplink subband are uplink frequency units, all frequency units in a downlink subband are downlink frequency units, and all frequency units in a flexible subband are flexible frequency units.

It should be understood that, merely several possible specific patterns of the first subband pattern are provided above as examples. The first subband pattern may alternatively be another pattern including the flexible subband. This is not limited in this application.

In some implementations of the first aspect, when the first subband pattern indicates that the first frequency domain resource includes at most one downlink subband, one flexible subband, and one uplink subband, the first subband pattern specifically indicates that the first frequency domain resource includes only one downlink subband and one flexible subband, or the first subband pattern specifically indicates that the first frequency domain resource includes only one flexible subband and one uplink subband.

In some implementations of the first aspect, when the first subband pattern indicates that the first frequency domain resource includes at most one uplink subband, one flexible subband, and one downlink subband, the first subband pattern specifically indicates that the first frequency domain resource includes only one flexible subband and one downlink subband, or the first subband pattern specifically indicates that the first frequency domain resource includes only one uplink subband and one flexible subband.

In some implementations of the first aspect, when the first subband pattern indicates that the first frequency domain resource includes at most a first downlink subband, a first flexible subband, a first uplink subband, a second flexible subband, and a second downlink subband, the first subband pattern specifically indicates that the first frequency domain resource includes only the first downlink subband, the flexible subband, and the second downlink subband, where the flexible subband is located between the first downlink subband and the second downlink subband, or the first subband pattern specifically indicates that the first frequency domain resource includes only the first flexible subband, the uplink subband, and the second flexible subband, where the uplink subband is located between the first flexible subband and the second flexible subband.

In some implementations of the first aspect, transmission directions of all frequency units in one flexible subband in the first frequency domain resource are the same.

In some implementations of the first aspect, the second signaling further includes location information of at least one guard band, and the guard band is located between different types of subbands in the first frequency domain resource.

In some implementations of the first aspect, the second signaling further includes location information that is of each of one or more subbands in the first frequency domain resource and that is determined based on the first subband pattern.

In some implementations of the first aspect, the method further includes: The terminal device receives third signaling from the network device, where the third signaling indicates a second subband pattern, the second subband pattern is used to update a transmission direction of a frequency unit included in a first frequency unit set, and the first frequency unit set includes a frequency unit that corresponds to the flexible frequency unit in the first frequency domain resource and that is determined based on the first subband pattern; and the terminal device updates a transmission direction of a third time frequency resource based on the second subband pattern, where the third time frequency resource is a time frequency resource including one frequency unit in the first frequency unit set and the first time unit.

In the foregoing technical solution, the transmission direction of the frequency unit that is in the flexible subband in the first frequency domain resource and that is determined based on the first subband pattern may be updated again through the third signaling based on an actual requirement, to provide the flexibility of the SBFD system.

In some implementations of the first aspect, the first time unit set is included in a first time period, and the first time period is repeated by using a length of the first time period as a periodicity.

In some implementations of the first aspect, the first time unit set includes all flexible time units in the first time period.

In some implementations of the first aspect, the first signaling includes a location of a start time unit in the first time unit set in the first time period and a quantity of time units included in the first time unit set.

In the foregoing technical solution, an application range of the first subband pattern in a time domain resource may be dynamically adjusted through the first signaling based on an actual requirement, to improve the flexibility of the SBFD system.

In some implementations of the first aspect, the first signaling includes a first bitmap, bits included in the first bitmap are in one-to-one correspondence with time units in the first time period, and the first time unit set includes a time unit corresponding to a bit whose bit value is a first value in the first bitmap.

In the foregoing technical solution, an application range of the first subband pattern in a time domain resource may be dynamically adjusted through the first signaling based on an actual requirement, to improve the flexibility of the SBFD system.

In some implementations of the first aspect, the first time period is a time period corresponding to a first slot configuration periodicity, and the first slot configuration periodicity is one slot configuration periodicity included in cell-level uplink-downlink slot configuration signaling used by the terminal device.

It should be understood that, the cell-level uplink-downlink slot configuration signaling herein is tdd-UL-DL-ConfigurationCommon. The signaling is carried in a SIB 1 message.

In some implementations of the first aspect, each of the first time periods that are periodically repeated includes one first time unit set.

In some implementations of the first aspect, M first time periods in every N first time periods in the first time periods that are periodically repeated each include one first time unit set, and 1≤M<N.

In some implementations of the first aspect, the method further includes: The terminal device receives fourth signaling from the network device, where the fourth signaling is used to update the first time unit set to a third time unit set, the third time unit set is an empty set, and the first subband pattern takes effect in the third time unit set and does not take effect in the first time unit set; and the terminal device determines a transmission direction of a fourth time frequency resource based on a transmission direction of a third time unit, where the fourth time frequency resource is a time frequency resource including the third time unit and one frequency resource in the first time domain resource, and the third time unit is any time unit outside the third time unit set.

In the foregoing technical solution, the third time unit is set to the empty set based on the third signaling, so that the first subband pattern does not take effect in a time domain resource, that is, TDD is enabled, to implement dynamic switching between SBFD and the TDD, and improve flexibility of an SBFD system. For example, when interference is severe, a TDD mode can be dynamically switched to, to reduce interference and improve system reliability. When interference is not severe, an SBFD mode can be dynamically switched to, to improve uplink/downlink resource utilization and improve system efficiency.

According to a second aspect, a communication method is provided. The method may be performed by a network device, or may be performed by a component (for example, a chip or a circuit) of the network device. This is not limited herein. For ease of description, the following uses an example in which the method is performed by the network device for description.

The method may include: The network device determines first signaling and second signaling, where the first signaling indicates a first time unit set, the second signaling indicates a first subband pattern, the first subband pattern indicates a transmission direction of a frequency unit included in a first frequency domain resource set, and the first frequency domain resource includes one or more flexible frequency units, where the flexible frequency units are capable of being used for both uplink transmission and downlink transmission, the first frequency domain resource is a frequency unit set configured by the network device for a terminal device, the first subband pattern is used to determine a transmission direction of a first time frequency resource, the first time frequency resource is a time frequency resource including one frequency unit in the first frequency domain resource and a first time unit, and the first time unit is any time unit in the first time unit set; and the network device sends the first signaling and the second signaling to the terminal device.

For beneficial effects of the second aspect, refer to the descriptions of the first aspect. Details are not described herein again.

In some implementations of the second aspect, the first subband pattern indicates that all frequency units in the first frequency domain resource are flexible frequency units; the first subband pattern indicates that the first frequency domain resource includes at most one downlink subband, one flexible subband, and one uplink subband, where the downlink subband is located at a start location of the first frequency domain resource, the uplink subband is located at an end location of the first frequency domain resource, and the flexible subband is located between the downlink subband and the uplink subband; the first subband pattern indicates that the first frequency domain resource includes at most one uplink subband, one flexible subband, and one downlink subband, where the uplink subband is located at a start location of the first frequency domain resource, the downlink subband is located at an end location of the first frequency domain resource, and the flexible subband is located between the downlink subband and the uplink subband; or the first subband pattern indicates that the first frequency domain resource includes at most a first downlink subband, a first flexible subband, a first uplink subband, a second flexible subband, and a second downlink subband, where the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband, where all frequency units in an uplink subband are uplink frequency units, all frequency units in a downlink subband are downlink frequency units, and all frequency units in a flexible subband are flexible frequency units.

In some implementations of the second aspect, when the first subband pattern indicates that the first frequency domain resource includes at most one downlink subband, one flexible subband, and one uplink subband, the first subband pattern specifically indicates that the first frequency domain resource includes only one downlink subband and one flexible subband, or the first subband pattern specifically indicates that the first frequency domain resource includes only one flexible subband and one uplink subband.

In some implementations of the second aspect, when the first subband pattern indicates that the first frequency domain resource includes at most one uplink subband, one flexible subband, and one downlink subband, the first subband pattern specifically indicates that the first frequency domain resource includes only one flexible subband and one downlink subband, or the first subband pattern specifically indicates that the first frequency domain resource includes only one uplink subband and one flexible subband.

In some implementations of the second aspect, when the first subband pattern indicates that the first frequency domain resource includes at most a first downlink subband, a first flexible subband, a first uplink subband, a second flexible subband, and a second downlink subband, the first subband pattern specifically indicates that the first frequency domain resource includes only the first downlink subband, the flexible subband, and the second downlink subband, where the flexible subband is located between the first downlink subband and the second downlink subband, or the first subband pattern specifically indicates that the first frequency domain resource includes only the first flexible subband, the uplink subband, and the second flexible subband, where the uplink subband is located between the first flexible subband and the second flexible subband.

In some implementations of the second aspect, transmission directions of all frequency units in one flexible subband in the first frequency domain resource are the same.

In some implementations of the second aspect, the second signaling further includes location information of at least one guard band, and the guard band is located between different types of subbands in the first frequency domain resource.

In some implementations of the second aspect, the second signaling further includes location information that is of each of one or more subbands in the first frequency domain resource and that is determined based on the first subband pattern.

In some implementations of the second aspect, the method further includes: The network device sends third signaling to the terminal device, where the third signaling indicates a second subband pattern, the second subband pattern indicates a transmission direction of a frequency unit included in a first frequency unit set, the first frequency unit set includes a frequency unit that corresponds to the flexible frequency unit in the first frequency domain resource and that is determined based on the first subband pattern, the second subband pattern is used to update a transmission direction of a third time frequency resource, and the third time frequency resource is a time frequency resource including one frequency unit in the first frequency unit set and the first time unit.

In some implementations of the second aspect, the first time unit set is included in a first time period, and the first time period is repeated by using a length of the first time period as a periodicity.

In some implementations of the second aspect, the first time unit set includes all flexible time units in the first time period.

In some implementations of the second aspect, the first signaling includes a location of a start time unit in the first time unit set in the first time period and a quantity of time units included in the first time unit set.

In some implementations of the second aspect, the first signaling includes a first bitmap, bits included in the first bitmap are in one-to-one correspondence with time units in the first time period, and the first time unit set includes a time unit corresponding to a bit whose bit value is a first value in the first bitmap.

In some implementations of the second aspect, the first time period is a time period corresponding to a first slot configuration periodicity, and the first slot configuration periodicity is one slot configuration periodicity included in cell-level uplink-downlink slot configuration signaling used by the terminal device.

In some implementations of the second aspect, each of the first time periods that are periodically repeated includes one first time unit set.

In some implementations of the second aspect, M first time periods in every N first time periods in the first time periods that are periodically repeated each include one first time unit set, and $1 \leq M < N$.

In some implementations of the second aspect, the method further includes: The network device sends fourth signaling to the terminal device, where the fourth signaling is used to update the first time unit set to a third time unit set, the third time unit set is an empty set, and the first subband pattern takes effect in the third time unit set and does not take effect in the first time unit set.

According to a third aspect, a communication apparatus is provided. The apparatus is configured to perform the method provided in the first aspect. Specifically, the apparatus may include a unit and/or a module, for example, a processing unit and/or a communication unit, configured to perform the method in any one of the possible implementations of the first aspect and the first aspect.

In an implementation, the apparatus is a terminal device. When the apparatus is a terminal device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a terminal device. When the apparatus is the chip, the chip system, or the circuit used in the terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fourth aspect, a communication apparatus is provided. The apparatus is configured to perform the method provided in the second aspect. Specifically, the apparatus may include a unit and/or a module, for example, a processing unit and/or a communication unit, configured to perform the method in any one of the possible implementations of the second aspect and the second aspect.

In an implementation, the apparatus is a network device. When the apparatus is a network device, the communication unit may be a transceiver or an input/output interface; and the processing unit may be at least one processor. Optionally, the transceiver may be a transceiver circuit. Optionally, the input/output interface may be an input/output circuit.

In another implementation, the apparatus is a chip, a chip system, or a circuit used in a network device. When the apparatus is the chip, the chip system, or the circuit used in a terminal device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a fifth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in any possible implementation of the first aspect and the first aspect.

In an implementation, the apparatus is a terminal device.

In another implementation, the apparatus is a chip, a chip system, or a circuit used in a terminal device.

According to a sixth aspect, a communication apparatus is provided. The apparatus includes: at least one processor, where the at least one processor is coupled to at least one memory, the at least one memory is configured to store a computer program or instructions, and the at least one processor is configured to invoke the computer program or the instructions from the at least one memory and run the computer program or the instructions, to enable the communication apparatus to perform the method in any possible implementation of the second aspect and the second aspect.

In an implementation, the apparatus is a network device.

In another implementation, the apparatus is a chip, a chip system, or a circuit used in a network device.

According to a seventh aspect, a processor is provided, configured to perform the method provided in the foregoing aspects.

Operations such as sending and obtaining/receiving related to the processor may be understood as operations such as output and receiving or input of the processor, or operations such as sending and receiving performed by a radio frequency circuit and an antenna, unless otherwise specified, or provided that the operations do not contradict actual functions or internal logic of the operations in related descriptions. This is not limited in this application.

According to an eighth aspect, a computer-readable storage medium is provided. The computer-readable storage medium stores program code executed by a device, and the program code is used to perform the method according to any one of the first aspect or the possible implementations of the first aspect or the method according to any one of the second aspect or the possible implementations of the second aspect.

According to a ninth aspect, a computer program product including instructions is provided. When the computer program product is run on a computer, the computer is enabled to perform the method according to any one of the first aspect or the possible implementations of the first aspect or the method according to any one of the second aspect or the possible implementations of the second aspect.

According to a tenth aspect, a chip is provided. The chip includes a processor and a communication interface, and the processor reads, through the communication interface, instructions stored in a memory, to perform the method according to any one of the first aspect or the possible implementations of the first aspect or the method according to any one of the second aspect or the possible implementations of the second aspect.

Optionally, in an implementation, the chip further includes the memory. The memory stores a computer program or instructions. The processor is configured to execute the computer program or the instructions stored in the memory. When the computer program or the instructions are executed, the processor is configured to perform the method according to any one of the first aspect or the possible implementations of the first aspect or the method according to any one of the second aspect or the possible implementations of the second aspect.

According to an eleventh aspect, a communication system is provided. The communication system includes the communication apparatus shown in the fifth aspect and the communication apparatus shown in the sixth aspect.

BRIEF DESCRIPTION OF DRAWINGS

FIG. 1 is a diagram of a communication system according to an embodiment of this application;
FIG. 2 is a time frequency diagram of subband full duplex;
FIG. 3(a) to FIG. 3(c) are a block diagram of an SBFD dedicated uplink-downlink slot configuration and an SBFD subband configuration;
FIG. 4 is a schematic flowchart of a subband configuration method according to this application;
FIG. 5 shows a possible example in which a first time period that is periodically repeated includes a first time unit set;
FIG. 6 shows another possible example in which a first time period that is periodically repeated includes a first time unit set;
FIG. 7 is a diagram of determining a transmission direction of a time frequency resource in a first slot configuration periodicity according to a subband configuration method provided in this application;
FIG. 8 is a block diagram of a communication apparatus 200 according to this application; and
FIG. 9 is a diagram of a structure of a communication apparatus 300 according to this application.

DESCRIPTION OF EMBODIMENTS

The following describes technical solutions in embodiments in this application with reference to accompanying drawings.

The technical solutions in embodiments of this application may be applied to various communication systems, for example, wireless communication related to 5th generation (5th generation, 5G), new radio (new radio, NR), long term evolution (long term evolution, LTE), internet of things (internet of things, IoT), wireless-fidelity (wireless-fidelity, Wi-Fi), the 3rd generation partnership project (3rd generation partnership project, 3GPP), or other wireless communication that may occur in the future.

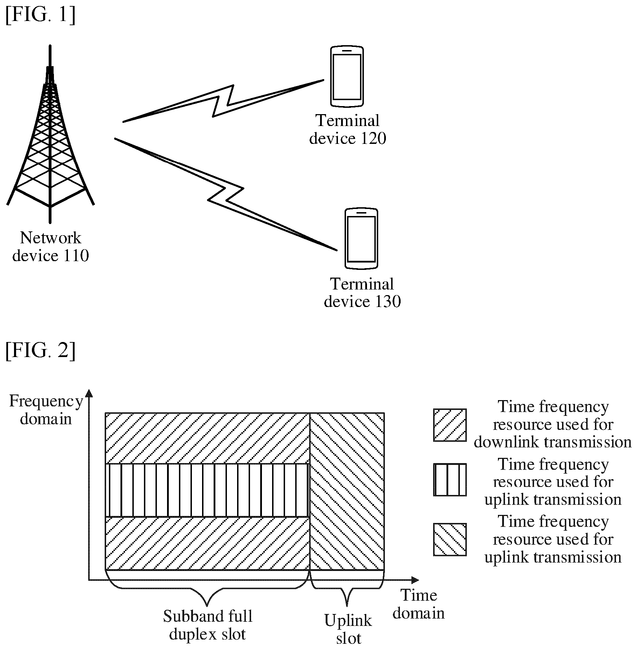

FIG. 1 is a diagram of a communication system according to an embodiment of this application. The communication system 100 includes at least one network device, for example, a network device 110 shown in FIG. 1. The communication system 100 may further include at least one terminal device, for example, a terminal device 120 and/or a terminal device 130 shown in FIG. 1. The network device 110 may communicate with the terminal device 120/130 via a radio link, to exchange information. It may be understood that, the network device and the terminal device may also be referred to as communication devices.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, a base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. For example, the CU is responsible for processing a non-real-time protocol and service, and implements functions at radio resource control (radio resource control, RRC) and packet data convergence protocol (packet data convergence protocol, PDCP) layers. The DU is responsible for processing a physical layer protocol and a real-time service, and implements functions of a radio link control (radio link control, RLC) layer, a medium access control (medium access control, MAC) layer, and a physical (physical, PHY) layer. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). The network device may further include an active antenna unit (active antenna unit, AAU for short). The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU. It may be understood that the network device may be a device including one or more of a CU node, a DU node, and an AAU node. In addition, the CU may be classified into a network device in an access network (radio access network, RAN), or the CU may be classified into a network device in a core network (core network, CN). This is not limited in this application. For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined component or component that can implement a function of the access network device. The apparatus may be installed in the network device. In this embodiment of this application, the chip system may include a chip, or may include a chip and another discrete component.

The terminal device is a user side device having a wireless transceiver function, and may be a fixed device, a mobile device, a handheld device (for example, a mobile phone), a wearable device, a vehicle-mounted device, or a wireless apparatus (for example, a communication module, a modem, or a chip system) built in the foregoing device. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC), internet of things, virtual reality (virtual reality, VR), augmented reality (augmented reality, AR), industrial control (industrial control), self-driving (self-driving), remote medical (remote medical), a smart grid (smart grid), smart furniture, smart office, smart wearable, smart transportation, a smart city (smart city), an uncrewed aerial vehicle, and a robot. For example, the terminal device may be a handheld terminal in the cellular communication, a communication device in the D2D, an internet of things device in the MTC, a surveillance camera in the smart transportation and the smart city, or a communication device in the uncrewed aerial vehicle. The terminal device may be sometimes referred to as a user equipment (user equipment, UE), a user terminal, a user apparatus, a subscriber unit, a subscriber station, a terminal, an access terminal, an access station, a UE station, a remote station, a mobile device, a wireless communication device, or the like. In embodiments of this application, an apparatus configured to implement a function of the terminal device may be a terminal device, or may be an apparatus that can support the terminal device in implementing the function, for example, a chip system, or a combined component or device that can implement the function of the terminal device. The apparatus may be installed in the terminal device.

To facilitate understanding of embodiments of this application, concepts and related procedures in this application are described first.

1. Symbol (symbol): The symbol is an abbreviation of a time domain symbol, and may also be referred to as an OFDM symbol. It should be noted that the time domain symbol may be alternatively named in combination with another multiple access manner. This is not limited in embodiments of this application. For different subcarrier spacings, lengths of the time domain symbol may be different.

It should be understood that symbols in a slot (slot) may include three types: a downlink symbol, an uplink symbol, and a flexible symbol. The uplink symbol can be used only for uplink transmission, and the downlink symbol can be used only for downlink transmission. The flexible symbol has no determined transmission direction, and may be used for uplink transmission or downlink transmission based on an indication of control signaling. Symbols in a slot may be all downlink symbols, or all uplink symbols, or all flexible symbols, or may be a combination of several types of symbols.

2. Time unit: The time unit may be a slot, a symbol, a subframe, a half-frame, a frame, a mini-subframe, or a mini-slot. This is not limited in this application.

3. Subband: The subband is a part of a frequency band in a carrier, namely, one or more consecutive physical resource blocks (physical resource blocks, PRBs) in frequency domain. In this application, the subband may also be understood as a frequency domain resource.

4. SBFD: In the SBFD solution, one carrier is divided into a plurality of non-overlapping subbands, and transmission directions of different subbands may be different. In other words, one carrier includes a first subband and a second subband that do not overlap, and transmission directions of the first subband and the second subband are different. It should be noted that the first subband and the second subband are two types of subbands with different transmission directions, and this does not mean that one carrier includes only two subbands. For example, a carrier includes a subband #1 and a subband #2, and transmission directions of the subband #1 and the subband #2 are different. Alternatively, a carrier includes a subband #1, a subband #2, and a subband #3. Transmission directions of the subband #1 and the subband #3 are the same, and transmission directions of the subband #1 and the subband #2 are different.

5. SBFD slot: Frequency resources in the SBFD slot include two or more subbands with different transmission directions. For example, time frequency division of a typical SBFD solution is shown in FIG. 2. A horizontal axis represents time domain, and a vertical axis represents frequency domain. In FIG. 2, two rectangular blocks filled with left slashes each represent a group of time frequency resources used for downlink transmission, a rectangular block filled with vertical bars represent a group of time frequency resources used for uplink transmission, and slots in a time domain range occupied by the three blocks of time frequency resources are referred to as SBFD slots.

6. Non-SBFD slot: Transmission directions of all frequency resources in the non-SBFD slot are the same. For example, a rectangular block filled with right slashes in FIG. 2 represents a group of time frequency resources used for uplink transmission, and slots in a time domain range occupied by the block of time frequency resources are referred to as uplink slots. Transmission directions of all frequency resources in these slots are uplink, and these slots may be referred to as non-SBFD slots.

7. TDD flexible configuration and configuration parameter: Uplink-downlink slot configuration in NR depends on tdd-UL-DL-ConfigurationCommon and tdd-UL-DL-ConfigurationDedicated, where tdd-UL-DL-ConfigurationCommon is cell-level uplink-downlink slot configuration signaling, and tdd-UL-DL-ConfigurationDedicated is UE-level uplink-downlink slot configuration signaling.

A terminal device in each cell completes slot configuration according to the following steps.

If tdd-UL-DL-ConfigurationCommon (cell-level uplink-downlink slot configuration signaling) is indicated to the UE, the UE sets a slot format for each slot in a slot set indicated by tdd-UL-DL-ConfigurationCommon. tdd-UL-DL-ConfigurationCommon includes the following information:

(1) a reference subcarrier spacing (subcarrier spacing, SCS) $\mu_{ref}$, indicated by signaling referenceSubcarrierSpacing; and
(2) an uplink-downlink configuration pattern, indicated by signaling pattern1, where pattern1 includes:

(a) a slot configuration periodicity P msec, indicated by signaling dl-UL-TransmissionPeriodicity, where Msec represents millisecond, and may also be written as ms in this application;
(b) a quantity of downlink slots $d_{slot}$, indicated by signaling nrofDownlinkSlots, where a symbol of each downlink slot is a downlink symbol;
(c) a quantity of downlink symbols $d_{sym}$, indicated by signaling nrofDownlinkSymbols;
(d) a quantity of uplink slots $\mu_{slot}$, indicated by signaling nrofUplinkSlots; and
(e) a quantity of uplink symbols $\mu_{sym}$, indicated by signaling nrofUplinkSymbols.

The defined slot configuration periodicity P msec includes $S = p * 2^{\mu ref}$ slots, where for a definition of P, refer to section TS 38.213 11.1. In the S slots, the first $d_{slot}$ slots include only downlink symbols, and the last $\mu_{slot}$ slots include only uplink symbols. $d_{sym}$ symbols immediately following the first $d_{slot}$ slots are downlink symbols, and $\mu_{sym}$ symbols immediately preceding the last $\mu_{slot}$ slots are uplink symbols. The remaining $(S - d_{slot} - \mu_{slot}) * N_{symb}^{slot} - d_{sym} - \mu_{sym}$ symbols are flexible symbols, where $N_{symb}^{slot}$ is a quantity of symbols in one slot.

If tdd-UL-DL-ConfigurationCommon provides both pattern1 and pattern2, the UE sets a slot format for each slot in a slot set indicated by pattern1, and sets a slot format for each slot in a slot set indicated by pattern2, where pattern2 includes:

(a) a slot configuration periodicity $P_2$ msec, indicated by signaling dl-UL-TransmissionPeriodicity;
(b) a quantity of downlink slots $d_{slot,2}$, indicated by signaling nrofDownlinkSlots, where a symbol of each downlink slot is a downlink symbol;
(c) a quantity of downlink symbols $d_{sym,2}$, indicated by signaling nrofDownlinkSymbols;

(d) a quantity of uplink slots $\mu_{slot,2}$, indicated by signaling nrofUplinkSlots; and

(e) a quantity of uplink symbols $\mu_{sym,2}$, indicated by signaling nrofUplinkSymbols.

A slot configuration periodicity (P+P$_2$) msec includes $S = p$ *$2^{\mu ref}$ slots and $S_2 = p_2$ * $2^{\mu ref}$ slots in total. In the S$_2$ slots, the first $d_{slot,2}$ slots include only downlink symbols, and the last $\mu_{slot,2}$ slots include only uplink symbols. $d_{sym,2}$ symbols immediately following the first $d_{slot,2}$ slots are downlink symbols, and $\mu_{sym,2}$ symbols immediately preceding the last $\mu_{slot,2}$ slots are uplink symbols. The remaining $(S_2 - d_{slot,2} - \mu_{slot,2}) * N_{symb}^{slot} - d_{sym,2} - \mu_{sym,2}$ symbols are flexible symbols, where * represents multiplication.

If tdd-UL-DL-ConfigurationDedicated (UE-level uplink-downlink slot configuration signaling) is further indicated to the UE, the signaling tdd-UL-DL-ConfigurationDedicated is used to perform further uplink-downlink configuration only on a flexible symbol configured by using tdd-UL-DL-ConfigurationCommon in a slot configuration periodicity indicated by tdd-UL-DL-ConfigurationCommon. tdd-UL-DL-ConfigurationDedicated includes the following information:

(1) a symbol configuration set, indicated by slotSpecificConfigurationsToAddModList, where slotSpecificConfigurationsToAddModList provides a series of flexible symbol configuration manners; and
(2) for each symbol configuration in the symbol configuration set:

(a) A slot index is indicated by slotIndex. The slotIndex identifies a slot in a slot configuration period specified in tdd-UL-DL-ConfigurationCommon.
(b) Directions of symbols in a slot are indicated by symbols.

Specifically, if symbols=allDownlink, all symbols in the slot are downlink symbols. If symbols=allUplink, all symbols in the slot are uplink symbols. If symbols=explicit, nrofDownlinkSymbols indicates a quantity of downlink symbols in the slot and these downlink symbols are located at the front of the slot, and nrofUplinkSymbols indicates a quantity of uplink symbols in the slot and these uplink symbols are located at the back of the slot. If nrofDownlinkSymbols is not configured, the slot has no downlink symbols. If nrofUplinkSymbols is not configured, the slot has no uplink symbols. Remaining symbols in the slot are flexible symbols.

It should be understood that, for a symbol indicated as a downlink symbol by tdd-UL-DL-ConfigurationCommon or tdd-UL-DL-ConfigurationDedicated in a slot, the UE may perform signal receiving on the symbol; and for a symbol indicated as an uplink symbol by tdd-UL-DL-ConfigurationCommon or tdd-UL-DL-ConfigurationDedicated in a slot, the UE may perform signal sending on the symbol.

It should be further understood that, scheduling of a flexible symbol is flexible, and scheduling of downlink control information (downlink control information, DCI) determines whether the symbol is used for downlink reception or uplink sending. For example, if the UE receives a corresponding indication of a DCI format, the UE receives a physical downlink shared channel (physical downlink shared channel, PDSCH) or a channel state information reference signal (channel state information reference signal, CSI-RS) in a flexible symbol set of the slot. For another example, if the UE receives a corresponding indication of a DCI format, a random access response (random access response, RAR) uplink (uplink, UL) grant, a fallbackRAR UL grant, or a successRAR, the UE transmits a physical uplink shared channel (physical uplink shared channel, PUSCH), a physical uplink control channel (physical uplink control channel, PUCCH), a physical random access channel (physical random access channel, PRACH), or a sounding reference signal (sounding reference signal, SRS) in the flexible symbol set of the slot.

8. SBFD dedicated uplink-downlink slot configuration: Based on different configurations of an uplink subband and a downlink subband in a slot, for example, the SBFD dedicated uplink-downlink slot configuration may include the following three types: XXXXX, XXXXU, and DXXXU, where D represents a downlink time unit, all symbols in the downlink time unit are downlink symbols, no uplink subband can be configured on the downlink symbols, U represents an uplink time unit, all symbols in the uplink time unit are uplink symbols, no downlink subband can be configured on the uplink symbols, X represents an SBFD time unit, and each symbol in the SBFD time unit may be configured with at least one uplink subband and at least one downlink subband. In this configuration method, uplink and downlink subbands configured on flexible symbols are invisible to the UE. In other words, the UE does not know frequency resource locations of the uplink and downlink subbands. In this case, if the UE determines to perform downlink transmission on a flexible symbol, a gNB should ensure that the UE is indicated to perform downlink reception only on a downlink subband configured for the flexible symbol. If the UE determines to perform uplink transmission on the flexible symbol, the gNB should ensure that the UE is indicated to perform uplink transmission only on an uplink subband configured for the flexible symbol.

It should be understood that, the SBFD time unit represented by X is a flexible time unit, and each symbol in the flexible time unit is a flexible symbol.

It should be further understood that, quantities of X in XXXXX, XXXXU, and DXXXU are merely examples for description, and the quantities of X may be configured by a network device based on an actual situation. In addition, XXXXX, XXXXU, and DXXXU may be configured through the cell-level uplink-downlink slot configuration signaling and the UE-level uplink-downlink slot configuration signaling in the concept explanation.

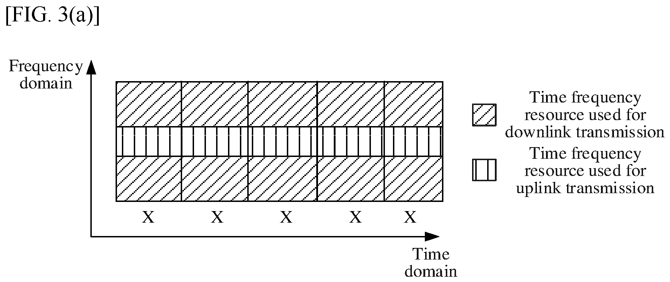

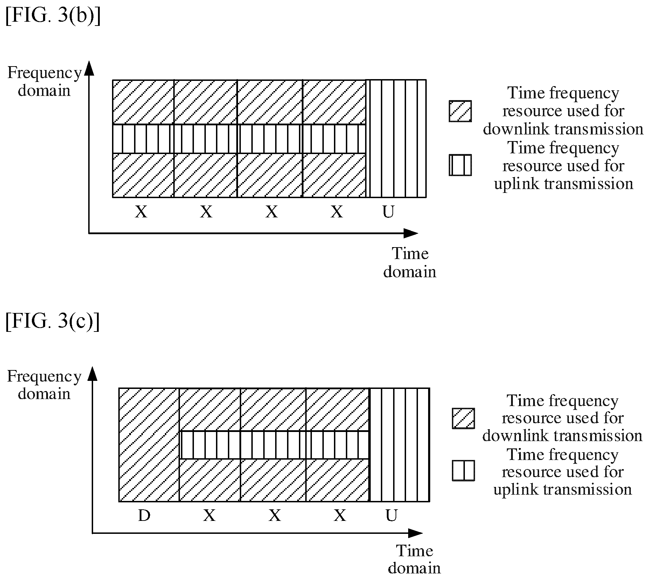

9. SBFD subband configuration: SBFD subbands include an uplink subband, a downlink subband, and a guard band. The uplink subband can be used only for uplink transmission, the downlink subband can be used only for downlink transmission, and the guard band cannot be used for uplink transmission or downlink transmission. For example, FIG. 3(a) is a possible example of XXXXX, FIG. 3(b) is a possible example of XXXXU, and FIG. 3(c) is a possible example of DXXXU.

Currently, as shown in FIG. 3(a) to FIG. 3(c), the SBFD subbands are semi-statically configured, and locations of time frequency resources used for uplink transmission and downlink transmission in one slot or one symbol are fixed. As a result, flexibility of the SBFD subband configuration is poor. For example, when there are a large quantity of downlink services and a small quantity of uplink services, uplink subband resources are seriously wasted, and downlink resources cannot support heavy downlink services. On the contrary, when there are a large quantity of uplink services and a small quantity of downlink services, downlink subband resources are seriously wasted, and uplink resources cannot support heavy uplink services.

In view of this, this application provides a subband configuration method, to effectively resolve the foregoing technical problem. The following describes in detail the method provided in this application.

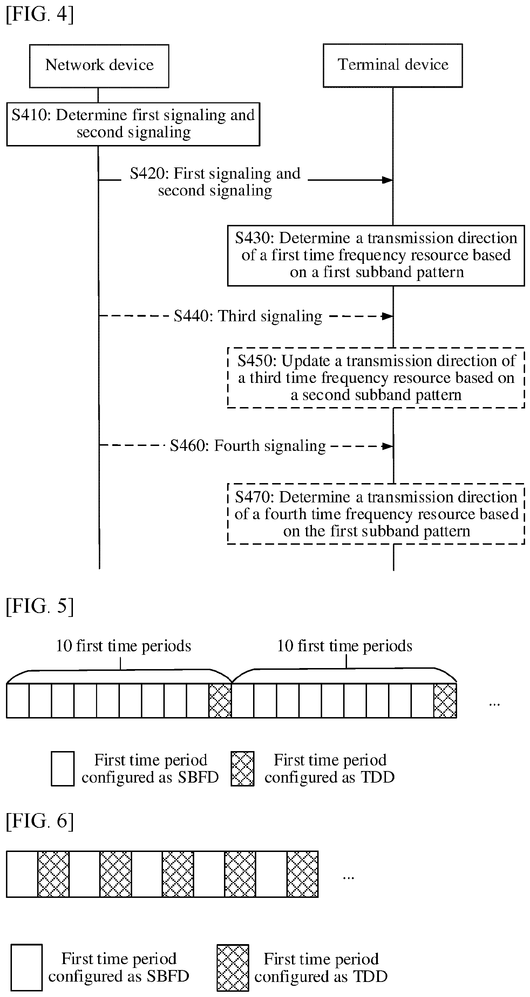

FIG. 4 is a schematic flowchart of a subband configuration method according to this application. The method includes the following steps.

S410: A network device determines first signaling and second signaling.

The first signaling indicates a first time unit set, and the first time unit set includes one or more time units.

The second signaling indicates a first subband pattern, the first subband pattern indicates a transmission direction of each frequency unit included in a first frequency domain resource, and the first frequency domain resource includes one or more flexible frequency units, where these flexible frequency units are capable of being used for both uplink transmission and downlink transmission, and the first frequency domain resource is a frequency unit set configured by the network device for a terminal device.

It should be understood that, the first subband pattern is used to determine a transmission direction of a first time frequency resource, where the first time frequency resource is a time frequency resource including one frequency unit in the first frequency domain resource and a first time unit, and the first time unit is any time unit in the first time unit set. In other words, a time domain resource range in which the first subband pattern takes effect is a time unit in the first time unit set.

Optionally, the first time unit set is included in a first time period, and the first time period is repeated by using a length of the first time period as a periodicity.

Optionally, each of the first time periods that are periodically repeated includes one first time unit set.

Optionally, starting from a 1st first time period in the first time periods that are periodically repeated, M first time periods in every N first time periods include one first time unit set, and $1 \leq M < N$. Locations of the M first time periods in the N first time periods may be predefined, or may be indicated by the first signaling. This is not limited in this application. For example, as shown in FIG. 5, N=10, M=9, and the M (M=9) first time periods are the first nine first time periods in the N (N=10) first time periods, which indicates that in every 10 periodicities, the first nine periodicities are configured as SBFD, and a last periodicity is configured as TDD. For another example, as shown in FIG. 6, N=2 and M=1, which indicates that one of the two periodicities is configured as SBFD, the other of the two periodicities is configured as TDD, and the SBFD and the TDD are alternately configured.

Optionally, the first time period may be a predefined time period or a time period indicated by the first signaling. For example, the first signaling may indicate location information of the first time periods that are periodically repeated. The location information includes one start location and first duration, or the location information includes one start location and one end location. It may be understood that, when the location information includes one piece of start location information and the first duration, the terminal device considers that the start location is a start location of the 1st first time period in the first time periods that are periodically repeated, and the first duration is a length of the first time period. It may be understood that, when the location information includes one piece of start location information and one end location, the terminal device considers that the start location is the start location of the 1st first time period in the first time periods that are periodically repeated, and the end location is an end location of the 1st first time period in the first time periods that are periodically repeated. The length of the first time period may be determined based on the start location and the end location.

Optionally, the first time period may be a time period corresponding to a first slot configuration periodicity, and the first slot configuration periodicity is a slot configuration periodicity included in cell-level slot configuration signaling (namely, tdd-UL-DL-ConfigurationCommon). In an example, the following provides several possible implementations in which the first signaling indicates the first time unit set by using an example in which the first time period is the first slot configuration periodicity.

Implementation 1

The first time unit set indicated by the first signaling includes all flexible symbols in the first slot configuration periodicity (namely, an example of the first time period).

Implementation 2

The first signaling includes a location of a start time unit $S_{window,\mathrm{l}}$ in a first time window and a window length $L_{window,\mathrm{l}}$ of the window (namely, a quantity of time units included in the first time window), and the first time unit set includes all time units in the first time window in the first slot configuration periodicity.

For example, if $S_{window,\mathrm{l}}$ is a slot index in the first slot configuration periodicity, $0 \le S_{window,\mathrm{l}} < S$, where S is a quantity of slots included in the first slot configuration periodicity.

Optionally, when $S_{window,\mathrm{l}}$ indicates one slot index, a location of the start time unit is a location of a $1^{st}$ symbol in the slot.

For example, if $S_{window,\mathrm{l}}$ may be a symbol index in the first slot configuration periodicity,

$$0 \le S_{window,\mathrm{l}} < S \times N_{symb}^{slot}$$, where $N_{symb}^{slot}$ indicates a quantity of symbols included in one slot.

For example, if a unit of $L_{window,\mathrm{l}}$ is ms, $0 \le L_{window,\mathrm{l}} \le P$, where P is a length of the first slot configuration periodicity, and a unit is ms; if a unit of $L_{window,\mathrm{l}}$ is a slot, $0 \le L_{window,\mathrm{l}} \le S$, where S is a quantity of slots included in the first slot periodicity;

and if a unit of $L_{window,\mathrm{l}}$ is a symbol, $$0 \le L_{window,1} \le S \times N_{symb}^{slot}$$.

Implementation 3

The first signaling includes a first bitmap, bits included in the first bitmap are in one-to-one correspondence with time units in the first slot configuration periodicity, and the first time unit set includes a time unit corresponding to a bit whose bit value is a first value in the first bitmap.

For example, if the first value is 1, it indicates that a time unit corresponding to a bit whose bit value is 1 is included in the first time unit set, and a time unit corresponding to a bit whose bit value is not 1 is not included in the first time unit set.

For example, if one bit in the first bitmap corresponds to one slot in the first slot configuration periodicity, the first bitmap includes S bits in total, and S is a quantity of slots included in the first slot configuration periodicity.

For example, if one bit in the first bitmap corresponds to one symbol in the first slot configuration periodicity, the first bitmap includes $S \times N_{symb}^{slot}$ bits in total, and represents a quantity of symbols included in one slot.

Optionally, each first slot configuration periodicity includes one first time unit set.

Optionally, N first slot configuration periodicities in every M first slot configuration periodicities include the first time unit set.

It should be understood that, the foregoing implementation is described by using an example in which cell-level uplink-downlink slot configuration signaling includes only one slot configuration periodicity. When the cell-level uplink-downlink slot configuration signaling includes two slot configuration periodicities (for example, the first slot configuration periodicity and a second slot configuration periodicity), the first signaling may indicate the first time unit set and a second time unit set. In this case, for Implementation 1, the first time unit set includes flexible symbols in the first slot configuration periodicity, and the second time unit set includes flexible symbols in the second slot configuration periodicity. For Implementation 2, the first signaling includes information about the first time window in the first slot configuration periodicity and information about a second time window in the second slot configuration periodicity, the first time unit set includes the time units in the first time window, and the second time unit set includes time units in the second time window. For Implementation 3, the first signaling includes the first bitmap and a second bitmap, the bits included in the first bitmap are in one-to-one correspondence with the time units in the first slot configuration periodicity, bits included in the second bitmap are in one-to-one correspondence with time units in the second slot configuration periodicity, the first time unit set includes the time unit corresponding to the bit whose bit value is the first value in the first bitmap, and the second time unit set includes a time unit corresponding to a bit whose bit value is a first value in the second bitmap.

Optionally, when the second time unit set exists, the network device may configure only one subband pattern, that is, configure only the first subband pattern. In this case, a time domain resource range in which the first subband pattern takes effect may include the time units in the first time unit set and the time units in the second time unit set. Alternatively, the network device may configure one subband pattern for the first time unit set and one subband pattern for the second time unit set. For example, the network device configures a subband pattern #1 and a subband pattern #2, a time domain resource range in which the subband pattern #1 takes effect includes the time units in the first time unit set, and a time domain resource range in which the subband pattern #2 takes effect includes the time units in the second time unit set.

Possible implementations of the first signaling are described in detail above, and related information of the second signaling is described in detail below.

The second signaling indicates the first subband pattern, and the first subband pattern indicates a type of each frequency unit included in the first frequency domain resource.

Optionally, the type of the frequency unit includes an uplink frequency unit, a downlink frequency unit, and a flexible frequency unit. The uplink frequency unit can be used only for uplink transmission, the downlink frequency unit can be used only for downlink transmission, and the flexible frequency unit can be used for both uplink transmission and downlink transmission. In this application, the type of the frequency unit may also be described as a transmission direction of the frequency unit.

For example, the first subband pattern may be one of the following four patterns.

Pattern 1: The pattern 1 indicates that all frequency units in the first frequency domain resource are flexible frequency units.

Pattern 2: The pattern 2 indicates that the first frequency domain resource includes at most one downlink subband, one flexible subband, and one uplink subband, where the downlink subband is located at a start location of the first frequency domain resource, the uplink subband is located at an end location of the first frequency domain resource, and the flexible subband is located between the downlink subband and the uplink subband.

Pattern 3: The pattern 3 indicates that the first frequency domain resource includes at most one uplink subband, one flexible subband, and one downlink subband, where the uplink subband is located at a start location of the first frequency domain resource, the downlink subband is located at an end location of the first frequency domain resource, and the flexible subband is located between the downlink subband and the uplink subband.

Pattern 4: The pattern 4 indicates that the first frequency domain resource includes at most a first downlink subband, a first flexible subband, a first uplink subband, a second flexible subband, and a second downlink subband, where the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband.

It should be understood that, one subband includes at least one frequency unit, all frequency units in one uplink subband are uplink frequency units, all frequency units in one downlink subband are downlink frequency units, and all frequency units in one flexible subband are flexible frequency units.

Optionally, transmission directions of all the frequency units in the flexible subband in this application are the same. In other words, if some frequency units in a flexible subband are indicated (for example, indicated by the network device) to perform uplink transmission, frequency units in the flexible subband other than these frequency units can only be used to perform uplink transmission, and cannot be indicated to perform downlink transmission, and vice versa.

Examples are described below. It is assumed that one flexible subband includes 100 resource blocks (resource blocks, RBs). If the network device indicates the terminal device to perform uplink transmission on an RB #0 to an RB #49 of a flexible subband #1, the network device cannot indicate the terminal device to perform downlink transmission on an RB #50 to an RB #99 of the flexible subband #1, and the terminal device can perform uplink transmission only on the RB #50 to the RB #99 of the flexible subband #1. Further, optionally, the network device cannot indicate all terminal devices served by the network device to perform downlink transmission on the flexible subband (the RB #0 to the RB #99), and only uplink transmission can be performed on the flexible subband.

It should be further understood that, merely several possible specific patterns of the first subband pattern are provided above as examples. The first subband pattern may alternatively be another pattern including a flexible subband. This is not limited in this application.

It should be further understood that, when the first subband pattern is the pattern 2, the pattern 3, or the pattern 4, the network device further needs to indicate, to the terminal device through the second signaling, specific location information that is of each of one or more subbands in the first frequency domain resource and that is determined based on the first subband pattern.

The following describes, by using an example, how the second signaling indicates the specific location information of each subband in the first frequency domain resource when the first subband pattern is the pattern 2, the pattern 3, or the pattern 4.

(1) When the first subband pattern is the pattern 2, the second signaling includes $L_{RB,1}$ and $L_{RB,2}$, where $L_{RB,1}$ and $L_{RB,2}$ indicate that the first $L_{RB,1}$ RBs of the first frequency domain resource form the first downlink subband, the last $L_{RB,2}$ RBs of the first frequency domain resource form the first uplink subband, and the remaining $N_{BWP}^{size} - L_{RB,1} - L_{RB,2}$ RBs of the first frequency domain resource form the first flexible subband, where

$N_{BWP}^{size}$ is a quantity of RBs included in the first frequency domain resource, $0 \leq L_{RB,1} \leq N_{BWP}^{size}$, and $0 \leq L_{RB,2} \leq N_{BWP}^{size}$.

It should be understood that, the first $L_{RB,1}$ RBs herein are $L_{RB,1}$ consecutive RBs including an RB with a smallest index in the first frequency domain resource in ascending order of RB indexes. The last $L_{RB,2}$ RBs herein are $L_{RB,2}$ consecutive RBs including an RB with a largest index in the first frequency domain resource in descending order of RB indexes. The same descriptions are not provided below.

It may be understood that, if $L_{RB,1} = 0$, the first downlink subband does not exist, that is, the first flexible subband starts from a start RB (namely, the RB with the smallest RB index) of the first frequency domain resource. If $L_{RB,2} = 0$, the first uplink subband does not exist, that is, the first flexible subband ends at an end RB (namely, the RB with the largest RB index) of the first frequency domain resource. If $L_{RB,2} = 0$ and $L_{RB,1} = 0$, the pattern 2 is equivalent to the pattern 1.

Optionally, when the pattern 2 indicates that the first frequency domain resource includes at most one downlink subband, one flexible subband, and one uplink subband, the pattern 2 specifically indicates that the first frequency domain resource includes only one downlink subband and one flexible subband (referred to as a pattern #21 below), or the pattern 2 specifically indicates that the first frequency domain resource includes only one flexible subband and one uplink subband (referred to as a pattern #22 below).

For example, when the first subband pattern is the pattern #21, the second signaling includes $L_{RB,1}$, where $L_{RB,1}$ indicates that the first $L_{RB,1}$ RBs of the first frequency domain resource form the first downlink subband, and the remaining $N_{BWP}^{size} - L_{RB,1}$ RBs of the first frequency domain resource form the first flexible subband, where $N_{BWP}^{size}$ is a quantity of RBs included in the first frequency domain resource, and $0 \leq L_{RB,1} \leq N_{BWP}^{size}$.

Optionally, the method in this example is used for configuration only when the downlink subband is configured on the flexible symbol.

For example, when the first subband pattern is the pattern #21, the second signaling includes $L_{RB,1}$, where $L_{RB,1}$ indicates that the last $L_{RB,1}$ RBs of the first frequency domain resource form the first flexible subband, and the remaining $N_{BWP}^{size} - L_{RB,1}$ RBs of the first frequency domain resource form the first downlink subband, where $N_{BWP}^{size}$ is a quantity of RBs included in the first frequency domain resource, and $0 \leq L_{RB,1} \leq N_{BWP}^{size}$.

Optionally, the method in this example is used for configuration only when the flexible subband is configured on the downlink symbol.

For example, when the first subband pattern is the pattern #22, the second signaling includes $L_{RB,2}$, where $L_{RB,2}$ indicates that the first $L_{RB,2}$ RBs of the first frequency domain resource form the first flexible subband, and the remaining $N_{BWP}^{size} - L_{RB,2}$ RBs of the first frequency domain resource form the first uplink subband, where $N_{BWP}^{size}$ is a quantity of RBs included in the first frequency domain resource, and $0 \leq L_{RB,2} \leq N_{BWP}^{size}$.

Optionally, the method in this example is used for configuration only when the flexible subband is configured on the uplink symbol.

For example, when the first subband pattern is the pattern #22, the second signaling includes $L_{RB,2}$, where $L_{RB,2}$ indicates that the last $L_{RB,2}$ RBs of the first frequency domain resource form the first uplink subband, and the remaining $N_{BWP}^{size} - L_{RB,2}$ RBs of the first frequency domain resource form the first flexible subband, where $N_{BWP}^{size}$ is a quantity of RBs included in the first frequency domain resource, and $0 \leq L_{RB,2} \leq N_{BWP}^{size}$.

For example, the method in this example is used for configuration only when the uplink subband is configured on the flexible symbol.

(2) When the first subband pattern is the pattern 3, the second signaling includes $L_{RB,1}$ and $L_{RB,2}$, where $L_{RB,1}$ and $L_{RB,2}$ indicate that the first $L_{RB,2}$ RBs of the first frequency domain resource form the first uplink subband, the last $L_{RB,1}$ RBs of the first frequency domain resource form the first downlink subband, and the remaining $N_{BWP}^{size} - L_{RB,1} - L_{RB,2}$ RBs of the first frequency domain resource form the first flexible subband, where $0 \leq L_{RB,1} \leq N_{BWP}^{size}$ and $0 \leq L_{RB,2} \leq N_{BWP}^{size}$.

It may be understood that, if $L_{RB,1} = 0$, the first downlink subband does not exist, that is, the first flexible subband ends at an end RB (namely, the RB with the largest RB index) of the first frequency domain resource. If $L_{RB,2} = 0$, the first uplink subband does not exist, that is, the first flexible subband starts from a start RB (namely, the RB with the smallest RB index) of the first frequency domain resource. If $L_{RB,2} = 0$ and $L_{RB,1} = 0$, the pattern 3 is equivalent to the pattern 1.

Optionally, when the pattern 3 indicates that the first frequency domain resource includes at most one uplink subband, one flexible subband, and one downlink subband, the pattern 3 specifically indicates that the first frequency domain resource includes only one flexible subband and one downlink subband (referred to as a pattern #31 below), or the pattern 3 specifically indicates that the first frequency domain resource includes only one uplink subband and one flexible subband (referred to as a pattern #32 below).

For example, when the first subband pattern is the pattern #31, the second signaling includes $L_{RB,1}$, where $L_{RB,1}$ indicates that the first $L_{RB,1}$ RBs of the first frequency domain resource form the first flexible subband, and the remaining $N_{BWP}^{size} - L_{RB,1}$ RBs of the first frequency domain resource form the first downlink subband, where $N_{BWP}^{size}$ is a quantity of RBs included in the first frequency domain resource, and $0 \leq L_{RB,1} \leq N_{BWP}^{size}$.

Optionally, the method in this example is used for configuration only when the flexible subband is configured on the downlink symbol.

For example, when the first subband pattern is the pattern #31, the second signaling includes $L_{RB,1}$, where $L_{RB,1}$ indicates that the last $L_{RB,1}$ RBs of the first frequency domain resource form the first downlink subband, and the remaining $N_{BWP}^{size} - L_{RB,1}$ RBs of the first frequency domain resource form the first flexible subband, where $N_{BWP}^{size}$ is a quantity of RBs included in the first frequency domain resource, and $0 \leq L_{RB,1} \leq N_{BWP}^{size}$.

Optionally, the method in this example is used for configuration only when the downlink subband is configured on the flexible symbol.

For example, when the first subband pattern is the pattern #32, the second signaling includes $L_{RB,2}$, where $L_{RB,2}$ indicates that the first $L_{RB,2}$ RBs of the first frequency domain resource form the first uplink subband, and the remaining $N_{BWP}^{size} - L_{RB,2}$ RBs of the first frequency domain resource form the first flexible subband, where $N_{BWP}^{size}$ is a quantity of RBs included in the first frequency domain resource, and $0 \leq L_{RB,2} \leq N_{BWP}^{size}$.

Optionally, the method in this example is used for configuration only when the uplink subband is configured on the flexible symbol.

For example, when the first subband pattern is the pattern #32, the second signaling includes $L_{RB,2}$, where $L_{RB,2}$ indicates that the last $L_{RB,2}$ RBs of the first frequency domain resource form the first flexible subband, and the remaining $N_{BWP}^{size} - L_{RB,2}$ RBs of the first frequency domain resource form the first uplink subband, where $N_{BWP}^{size}$ is a quantity of RBs included in the first frequency domain resource, and $0 \leq L_{RB,2} \leq N_{BWP}^{size}$.

Optionally, the method in this example is used for configuration only when the flexible subband is configured on the uplink symbol.

(3) When the first subband pattern is the pattern 4, the second signaling includes $L_{RB,1}$, $L_{RB,2}$, $S_{RB,2}$, and $L_{RB,3}$, where $L_{RB,1}$, $L_{RB,2}$, $S_{RB,2}$, and $L_{RB,3}$ indicate that the first $L_{RB,1}$ RBs of the first frequency domain resource form the first downlink subband, the last $L_{RB,3}$ RBs of the first frequency domain resource form the second downlink subband, a total of $S_{RB,2}$ - $L_{RB,1}$ RBs starting from an $L_{RB,1} + 1$th RB of the first frequency domain resource to an $S_{RB,2}$th RB of the first frequency domain resource form the first flexible subband, $L_{RB,2}$ RBs starting from an $S_{RB,2} + 1$th RB of the first frequency domain resource form the first uplink subband, and a total of $N_{BWP}^{size} - L_{RB,3} - S_{RB,2} - L_{RB,2}$ RBs starting from an $S_{RB,2} + L_{RB,2} + 1$th RB of the first frequency domain resource to an $N_{BWP}^{size} - L_{RB,3}$th RB of the first frequency domain resource form the second flexible subband. A quantity of RBs included in each subband in the pattern is greater than or equal to 0 and less than or equal to $N_{BWP}^{size}$.

It may be understood that, if $L_{RB,1} = 0$, the first downlink subband does not exist, that is, the first flexible subband starts from a start RB (namely, the RB with the smallest RB index) of the first frequency domain resource. If $L_{RB,3} = 0$, the second downlink subband does not exist, that is, the second flexible subband ends at an end RB (namely, the RB with the largest RB index) of the first frequency domain resource. If $L_{RB,2} = 0$, the first uplink subband and the second flexible subband do not exist, and the first flexible subband starts from the $L_{RB,1} + 1$th RB of the first frequency domain resource to the $N_{BWP}^{size} - L_{RB,3}$th RB of the first frequency domain resource. If $L_{RB,1} = 0$, $L_{RB,3} = 0$, and $L_{RB,2} = 0$, the pattern 4 is equivalent to the pattern 1.

Optionally, one or more of the foregoing parameters may be configured in the second signaling, provided that the location information of each subband of the first frequency domain resource can be determined based on the configured parameters.

Optionally, when any parameter of $L_{RB,1}$, $L_{RB,2}$, and $L_{RB,3}$ is not configured, a value of the parameter that is not configured is 0 by default.

Optionally, if $S_{RB,2}$ is not configured, $S_{RB,2}$ indicates a middle location of the first uplink subband. For example,

$$S_{RB,2} = \left[N_{BWP}^{size}/2\right], S_{RB,2} = \left[\left(N_{BWP}^{size} - L_{RB,2}\right)/2\right] \text{, or } S_{RB,2} = \left[N_{BWP}^{size}/2\right] - \left[L_{RB,2}/2\right] \text{, where } [\,]$$

represents a rounding up operation, a rounding down operation, or a rounding off operation.

Optionally, when the pattern 4 indicates that the first frequency domain resource includes at most a first downlink subband, a first flexible subband, a first uplink subband, a second flexible subband, and a second downlink subband, the pattern 4 specifically indicates that the first frequency domain resource includes only the first downlink subband, the flexible subband, and the second downlink subband (referred to as a pattern #41 below), where the flexible subband is located between the first downlink subband and the second downlink subband, or the pattern 4 specifically indicates that the first frequency domain resource includes only the first flexible subband, one uplink subband, and the second flexible subband (referred to as a pattern #42 below), where the uplink subband is located between the first flexible subband and the second flexible subband.

For example, when the first subband pattern is the pattern #41, the second signaling includes $S_{RB,2}$ and $L_{RB,2}$, where $S_{RB,2}$ and $L_{RB,2}$ indicate that a total of $L_{RB,2}$ RBs starting from an $S_{RB,2}$ + 1th RB of the first frequency domain resource to an $S_{RB,2} + L_{RB,2}$th RB of the first frequency domain resource form the flexible subband, RBs starting from a start RB of the first frequency domain resource to an $S_{RB,2}$th RB form the first downlink subband, and RBs starting from an $S_{RB,2} + L_{RB,2}$ + 1th RB of the first frequency domain resource to a last RB of the first frequency domain resource form the second downlink subband, where a quantity of RBs included in each subband in the pattern is greater than or equal to 0 and less than or equal to $N_{BWP}^{size}$, and $N_{BWP}^{size}$ is a quantity of RBs included in the first frequency domain resource.

Optionally, the method in this example is used for configuration only when the flexible subband is configured on the downlink symbol.

For example, when the first subband pattern is the pattern #41, the second signaling includes $L_{RB,1}$ and $L_{RB,3}$, where $L_{RB,1}$ indicates that the first $L_{RB,1}$ RBs of the first frequency domain resource form the first downlink subband, $L_{RB,3}$ indicates that the last $L_{RB,3}$ RBs of the first frequency domain resource form the second downlink subband, and the remaining $N_{BWP}^{size} - L_{RB,1} - L_{RB,3}$ RBs of the first frequency domain resource form the flexible subband, where $N_{BWP}^{size}$ is a quantity of RBs included in the first frequency domain resource, $0 \leq L_{RB,1} \leq N_{BWP}^{size}$, and $0 \leq L_{RB,3} \leq N_{BWP}^{size}$.

Optionally, the method in this example is used for configuration only when the downlink subband is configured on the flexible symbol.

For example, when the first subband pattern is the pattern #42, the second signaling includes $S_{RB,2}$ and $L_{RB,2}$, where $S_{RB,2}$ and $L_{RB,2}$ indicate that a total of $L_{RB,2}$ RBs starting from an $S_{RB,2}$ + 1th RB of the first frequency domain resource to an $S_{RB,2} + L_{RB,2}$th RB of the first frequency domain resource form the uplink subband, RBs starting from a start RB of the first frequency domain resource to an $S_{RB,2}$th RB of the first frequency domain resource form the first flexible subband, and RBs starting from an $S_{RB,2} + L_{RB,2}$ + 1th RB of the first frequency domain resource to a last RB of the first frequency domain resource form the second flexible subband, where a quantity of RBs included in each subband in the pattern is greater than or equal to 0 and less than or equal to $N_{BWP}^{size}$, and $N_{BWP}^{size}$ is a quantity of RBs included in the first frequency domain resource.

Optionally, the method in this example is used for configuration only when the uplink subband is configured on the flexible symbol.

For example, when the first subband pattern is the pattern #42, the second signaling includes $L_{RB,1}$ and $L_{RB,3}$, where $L_{RB,1}$ indicates that the first $L_{RB,1}$ RBs of the first frequency domain resource form the first flexible subband, $L_{RB,3}$ indicates that the last $L_{RB,3}$ RBs of the first frequency domain resource form the second flexible subband, and the remaining $N_{BWP}^{size} - L_{RB,1} - L_{RB,3}$ RBs of the first frequency domain resource form the uplink subband, where $N_{BWP}^{size}$ is a quantity of RBs included in the first frequency domain resource, $0 \leq L_{RB,1} \leq N_{BWP}^{size}$, and $0 \leq L_{RB,3} \leq N_{BWP}^{size}$.

Optionally, the method in this example is used for configuration only when the flexible subband is configured on the uplink symbol.

It can be learned that, locations of the subbands in (1) to (3) are determined based on the parameter indicated by the second signaling and by using the RB as a granularity. This application further provides another method for determining the locations of the subbands by using an RB set (RBS) as a granularity.

It should be understood that, one RBS includes a plurality of RBs. In an example, there are the following several possible configuration methods for a quantity $N_{RBS}^{size}$ of RBs included in one RBS.

Example 1, $N_{RBS}^{size}$ is predefined.

Example 2, $N_{RBS}^{size}$ is indicated by second signaling. For example, $2 \leq N_{RBS}^{size} \leq 16$.

Example 3, a candidate set of $N_{RBS}^{size}$ is predefined. For example, the candidate set of $N_{RBS}^{size}$ is {2, 4, 8, 16}, where indexes corresponding to 2, 4, 8, and 16 are respectively 0, 1, 2, and 3, and the second signaling indicates an index in the candidate set of predefined $N_{RBS}^{size}$.

Example 4, a method for determining a multiplexed resource block group (resource block group, RBG). The following briefly describes the method for determining the RBG. The RBG is a set of consecutive virtual resource blocks (virtual resource blocks, VRBs). A total quantity $N_{RBG}$ of RBGs included in one BWP$_i$ is calculated by using the following formula:

$$N_{RBG} = \left\lceil \left( N_{BWP,i}^{size} + \left( N_{BWP,i}^{start} \bmod P \right) \right) / P \right\rceil$$

P is a quantity of RBs included in one RBG configured by the network device, $N_{BWP,i}^{size}$ is a total quantity of RBs included in a BWP$_i$, $N_{BWP,i}^{start}$ is an index of a start RB in the BWP$_i$, and ⌈ ⌉ indicates rounding up.

Specifically, a size of a 1st RBG in $N_{RBG}$ is $RBG_0^{size} = P - N_{BWP,i}^{start} \bmod P$. If $\left( N_{BWP,i}^{start} + N_{BWP,i}^{size} \right) \bmod P > 0$, a size of a last RBG is $RBG_{last}^{size} = \left( N_{BWP,i}^{start} + N_{BWP,i}^{size} \right) \bmod P$; or otherwise, a size of a last RBG is P; and sizes of all other RBGs are P.

Similarly, a total quantity $N_{RBS}^{size}$ of RBSs included in the first frequency domain resource and a quantity of RBs included in each RBS may also be obtained by multiplexing the method for determining the RBG. Specifically, in the method for determining the RBG, P is replaced with $N_{RBS}^{size}$.

The following describes, with reference to a specific pattern, how to determine the location of the subband of the first frequency domain resource based on the parameter indicated in the second signaling and by using the RBS as the granularity.

(1) When the first subband pattern is the pattern 2, the second signaling includes $L_{RBS,1}$, $L_{RBS,2}$, $L_{RB,1}$, and $L_{RB,2}$, where $L_{RBS,1}$, $L_{RBS,2}$, $L_{RB,1}$, and $L_{RB,2}$ indicate that all RBs in the first $L_{RBS,1}$ RBSs of the first frequency domain resource and the immediately following $L_{RB,1}$ RBs form the first downlink subband, all RBs in the last $L_{RBS,2}$ RBSs of the first frequency domain resource and the immediately preceding $L_{RB,2}$ RBs form the first uplink subband, and the remaining RBs in the first frequency domain resource other than the first downlink subband and the first uplink subband form the first flexible subband. A quantity of RBs included in each subband in the pattern is greater than or equal to 0 and less than or equal to $N_{BWP}^{size}$.

It may be understood that, if $L_{RBS,1} = 0$ and $L_{RB,1} = 0$, the first downlink subband does not exist, that is, the first flexible subband starts from a start RB (namely, the RB with the smallest RB index) of the first frequency domain resource. If $L_{RBS,2} = 0$ and $L_{RB,2} = 0$, the first uplink subband does not exist, that is, the first flexible subband ends at an end RB (namely, the RB with the largest RB index) of the first frequency domain resource. If $L_{RBS,1} = 0$, $L_{RB,1} = 0$, $L_{RBS,2} = 0$, and $L_{RB,2} = 0$, the pattern 2 is equivalent to the pattern 1.

Optionally, when the pattern 2 indicates that the first frequency domain resource includes at most one downlink subband, one flexible subband, and one uplink subband, the pattern 2 specifically indicates that the first frequency domain resource includes only one downlink subband and one flexible subband (referred to as a pattern #21 below), or the pattern 2 specifically indicates that the first frequency domain resource includes only one flexible subband and one uplink subband (referred to as a pattern #22 below).

For example, when the first subband pattern is the pattern #21, the second signaling includes $L_{RBS,1}$ and $L_{RB,1}$, where $L_{RBS,1}$ and $L_{RB,1}$ indicate that all RBs in the first $L_{RBS,1}$ RBSs of the first frequency domain resource and the immediately following $L_{RB,1}$ RBs form the first downlink subband, and the remaining RBs in the first frequency domain resource other than the first downlink subband form the first flexible subband. A quantity of RBs included in each subband in the pattern is greater than or equal to 0 and less than or equal to $N_{BWP}^{size}$.

Optionally, the method in this example is used for configuration only when the downlink subband is configured on the flexible symbol.

For example, when the first subband pattern is the pattern #21, the second signaling includes $L_{RBS,2}$ and $L_{RB,2}$, where $L_{RBS,2}$ and $L_{RB,2}$ indicate that all RBs in the last $L_{RBS,2}$ RBSs of the first frequency domain resource and the immediately preceding $L_{RB,2}$ RBs form the first flexible subband, and the remaining RBs in the first frequency domain resource other than the first flexible subband form the first downlink subband. A quantity of RBs included in each subband in the pattern is greater than or equal to 0 and less than or equal to $N_{BWP}^{size}$.

Optionally, the method in this example is used for configuration only when the flexible subband is configured on the downlink symbol.

For example, when the first subband pattern is the pattern #22, the second signaling includes $L_{RBS,1}$ and $L_{RB,1}$, where $L_{RBS,1}$ and $L_{RB,1}$ indicate that all RBs in the first $L_{RBS,1}$ RBSs of the first frequency domain resource and the immediately following $L_{RB,1}$ RBs form the first flexible subband, and the remaining RBs in the first frequency domain resource other than the first flexible subband form the first uplink subband. A quantity of RBs included in each subband in the pattern is greater than or equal to 0 and less than or equal to $N_{BWP}^{size}$.

Optionally, the method in this example is used for configuration only when the flexible subband is configured on the uplink symbol.

For example, when the first subband pattern is the pattern #22, the second signaling includes $L_{RBS,2}$ and $L_{RB,2}$, where $L_{RBS,2}$ and $L_{RB,2}$ indicate that all RBs in the last $L_{RBS,2}$ RBSs of the first frequency domain resource and the immediately preceding $L_{RB,2}$ RBs form the first uplink subband, and the remaining RBs in the first frequency domain resource other than the first uplink subband form the first flexible subband. A quantity of RBs included in each subband in the pattern is greater than or equal to 0 and less than or equal to $N_{BWP}^{size}$.

Optionally, the method in this example is used for configuration only when the uplink subband is configured on the flexible symbol.

(2) When the first subband pattern is the pattern 3, the second signaling includes $L_{RBS,1}$, $L_{RBS,2}$, $L_{RB,1}$, and $L_{RB,2}$, where $L_{RBS,1}$, $L_{RBS,2}$, $L_{RB,1}$, and $L_{RB,2}$ indicate that all RBs in the first $L_{RBS,2}$ RBSs of the first frequency domain resource and the immediately following $L_{RB,2}$ RBs form the first uplink subband, all RBs in the last $L_{RBS,1}$ RBSs of the first frequency domain resource and the immediately preceding $L_{RB,1}$ RBs form the first downlink subband, and the remaining RBs in the first frequency domain resource other than the first downlink subband and the first uplink subband form the first flexible subband. A quantity of RBs included in each subband in the pattern is greater than or equal to 0 and less than or equal to $N_{BWP}^{size}$.

It may be understood that, if $L_{RBS,1} = 0$ and $L_{RB,1} = 0$, the first downlink subband does not exist, that is, the first flexible subband ends at an end RB (namely, the RB with the largest RB index) of the first frequency domain resource. If $L_{RBS,2} = 0$ and $L_{RB,2} = 0$, the first uplink subband does not exist, that is, the first flexible subband starts from a start RB (namely, the RB with the smallest RB index) of the first frequency domain resource. If $L_{RBS,1} = 0$, $L_{RB,1} = 0$, $L_{RBS,2} = 0$, and $L_{RB,2} = 0$, the pattern 3 is equivalent to the pattern 1.

Optionally, when the pattern 3 indicates that the first frequency domain resource includes at most one uplink subband, one flexible subband, and one downlink subband, the pattern 3 specifically indicates that the first frequency domain resource includes only one flexible subband and one downlink subband (referred to as a pattern #31 below), or the pattern 3 specifically indicates that the first frequency domain resource includes only one uplink subband and one flexible subband (referred to as a pattern #32 below).

For example, when the first subband pattern is the pattern #31, the second signaling includes $L_{RBS,2}$ and $L_{RB,2}$, where $L_{RBS,2}$ and $L_{RB,2}$ indicate that all RBs in the first $L_{RBS,2}$ RBSs of the first frequency domain resource and the immediately following $L_{RB,2}$ RBs form the first flexible subband, and the remaining RBs in the first frequency domain resource other than the first flexible subband form the first downlink subband. A quantity of RBs included in each subband in the pattern is greater than or equal to 0 and less than or equal to $N_{BWP}^{size}$.

Optionally, the method in this example is used for configuration only when the flexible subband is configured on the downlink symbol.

For example, when the first subband pattern is the pattern #31, the second signaling includes $L_{RBS,1}$ and $L_{RB,1}$, where $L_{RBS,1}$ and $L_{RB,1}$ indicate that all RBs in the last $L_{RBS,1}$ RBSs of the first frequency domain resource and the immediately preceding $L_{RB,1}$ RBs form the first downlink subband, and the remaining RBs in the first frequency domain resource other than the first downlink subband form the first flexible subband. A quantity of RBs included in each subband in the pattern is greater than or equal to 0 and less than or equal to $N_{BWP}^{size}$.

Optionally, the method in this example is used for configuration only when the downlink subband is configured on the flexible symbol.

For example, when the first subband pattern is the pattern #32, the second signaling includes $L_{RBS,2}$ and $L_{RB,2}$, where $L_{RBS,2}$ and $L_{RB,2}$ indicate that all RBs in the first $L_{RBS,2}$ RBSs of the first frequency domain resource and the immediately following $L_{RB,2}$ RBs form the first uplink subband, and the remaining RBs in the first frequency domain resource other than the first uplink subband form the first flexible subband. A quantity of RBs included in each subband in the pattern is greater than or equal to 0 and less than or equal to $N_{BWP}^{size}$.

Optionally, the method in this example is used for configuration only when the uplink subband is configured on the flexible symbol.

For example, when the first subband pattern is the pattern #32, the second signaling includes $L_{RBS,1}$ and $L_{RB,1}$, where $L_{RBS,1}$ and $L_{RB,1}$ indicate that all RBs in the last $L_{RBS,1}$ RBSs of the first frequency domain resource and the immediately preceding $L_{RB,1}$ RBs form the first flexible subband, and the remaining RBs in the first frequency domain resource other than the first flexible subband form the first uplink subband. A quantity of RBs included in each subband in the pattern is greater than or equal to 0 and less than or equal to $N_{BWP}^{size}$.

Optionally, the method in this example is used for configuration only when the flexible subband is configured on the uplink symbol.

(3) When the first subband pattern is the pattern 4, the second signaling includes $L_{RBS,1}$, $L_{RB,1}$, $S_{RBS,2}$, $L_{RBS,2}$, $L_{RB,2}$, $L'_{RB,2}$, $L_{RBS,3}$, and $L_{RB,3}$, where $L_{RBS,1}$, $L_{RB,1}$, $S_{RBS,2}$, $L_{RBS,2}$, $L_{RB,2}$, $L'_{RB,2}$, $L_{RBS,3}$, and $L_{RBS,3}$ indicate that all RBs in the first $L_{RBS,1}$ RBSs of the first frequency domain resource and the immediately following $L_{RB,1}$ RBs form the first downlink subband; all RBs in the last $L_{RBS,3}$ RBSs of the first frequency domain resource and the immediately preceding $L_{RB,3}$ RBs form the second downlink subband; all RBs in $L_{RBS,2}$ RBSs starting from an $S_{RBS,2} + 1^{th}$ RBS of the first frequency domain resource, the immediately preceding $L_{RB,2}$ RBs, and the immediately following $L'_{RB,2}$ RBs form the first uplink subband; RBs starting from a $1^{st}$ RB following a last RB of the first downlink subband to a last RB preceding a $1^{st}$ RB of the first uplink subband form the first flexible subband; and RBs starring from a $1^{st}$ RB following a last RB of the first uplink subband to a last RB preceding a $1^{st}$ RB of the second downlink subband form the second flexible subband. A quantity of RBs included in each subband in the pattern is greater than or equal to 0 and less than or equal to $N_{BWP}^{size}$.

It may be understood that, if $L_{RBS,1} = 0$ and $L_{RB,1} = 0$, the first downlink subband does not exist, that is, the first flexible subband starts from a start RB (namely, the RB with the smallest RB index) of the first frequency domain resource. If $L_{RBS,3} = 0$ and $L_{RB,3} = 0$, the second downlink subband does not exist, that is, the second flexible subband ends at an end RB (namely, the RB with the largest RB index) of the first frequency domain resource. If $L_{RBS,2} = 0$, $L_{RB,2} = 0$, and $L'_{RB,2} = 0$, the first uplink subband and the second flexible subband do not exist, and the first flexible subband starts from the $1^{st}$ RB following the last RB of the first downlink subband and ends at the last RB preceding the $1^{st}$ RB of the second downlink subband. If $L_{RBS,1} = 0$, $L_{RB,1} = 0$, $L_{RBS,3} = 0$, $L_{RB,3} = 0$, $L_{RBS,2} = 0$, $L_{RB,2} = 0$, and $L'_{RB,2} = 0$, the pattern 4 is equivalent to the pattern 1.

It can be learned from the foregoing that, $L_{RBS,1}$ indicates a quantity of downlink RBSs in the first downlink subband, and $0 \leq L_{RBS,1} \leq N_{BWP}^{RBS}$; $L_{RB,1}$ indicates a quantity of downlink RBs of an RBS that is less than one and that is in the first downlink subband, and $0 \leq L_{RB,1} < N_{RBS}^{size}$; $S_{RB,2}$ indicates a start location of an uplink RBS in the first uplink subband, and $0 \leq S_{RBS,2} \leq N_{BWP}^{RBS}$; $L_{RB,2}$ indicates a quantity of uplink RBs of an RBS that ranks top, that is less than one, and that is in the first uplink subband, and $0 \leq L_{RB,2} < N_{RBS}^{size}$; $L'_{RB,2}$ indicates a quantity of uplink RBs of an RBS that ranks bottom, that is less than one, and that is in the first uplink subband, $0 \leq L'_{RB,2} < N_{RBS}^{size}$; $L_{RBS,3}$ indicates a quantity of downlink RBSs in the second downlink subband, and $0 \leq L_{RBS,3} \leq N_{BWP}^{RBS}$; and $L_{RB,3}$ indicates a quantity of downlink RBs of an RBS that is less than one and that is in the second downlink subband, and $0 \leq L_{RB,3} < N_{RBS}^{size}$, where $N_{BWP}^{RBS}$ indicates a quantity of RBSs included in the first frequency resource.

Optionally, one or more of the foregoing parameters may be configured in the second signaling, provided that the location information of each subband of the first frequency domain resource can be determined based on the configured parameters.

Optionally, when any parameter of $L_{RBS,1}$, $L_{RB,1}$, $L_{RBS,2}$, $L_{RB,2}$, $L'_{RB,2}$, $L_{RBS,3}$, and $L_{RBS,3}$ is not configured, a value of the parameter that is not configured is 0 by default.

Optionally, if $S_{RBS,2}$ is not configured, $S_{RBS,2}$ indicates a middle location of the first uplink subband. For example,

$$S_{RB,2} = [N_{BWP}^{RBS}/2] \;, \; S_{RB,2} = \left[\left(N_{BWP}^{RBS} - L_{RBS,2}\right)/2\right] \text{, or } S_{RB,2} = [N_{BWP}^{RBS}/2] - \left[L_{RBS,2}/2\right] \text{, where}$$

$N_{BWP}^{RBS}$ is a quantity of RBSs included in the first frequency domain resource, and [] represents a rounding up operation, a rounding down operation, or a rounding off operation.

Optionally, when the pattern 4 indicates that the first frequency domain resource includes at most a first downlink subband, a first flexible subband, a first uplink subband, a second flexible subband, and a second downlink subband, the pattern 4 specifically indicates that the first frequency domain resource includes only the first downlink subband, one flexible subband, and the second downlink subband (referred to as a pattern #41 below), where the flexible subband is located between the first downlink subband and the second downlink subband, or the pattern 4 specifically indicates that the first frequency domain resource includes only the first flexible subband, one uplink subband, and the second flexible subband (referred to as a pattern #42 below), where the uplink subband is located between the first flexible subband and the second flexible subband.

For example, when the first subband pattern is the pattern #41, the second signaling includes $S_{RBS,2}$, $L_{RBS,2}$, $L_{RB,2}$, and $L'_{RB,2}$, where $S_{RBS,2}$, $L_{RBS,2}$, $L_{RB,2}$, and $L'_{RB,2}$ indicate that all RBs in $L_{RBS,2}$ RBSs starting from an $S_{RBS,2} + 1^{th}$ RB of the first frequency domain resource, the immediately preceding $L_{RB,2}$ RBs, and the immediately following $L'_{RB,2}$ RBs form the flexible subband, all RBs preceding the flexible subband in the first frequency domain resource form the first downlink subband; and all RBs following the flexible subband in the first frequency domain resource form the second downlink subband. A quantity of RBs included in each subband in the pattern is greater than or equal to 0 and less than or equal to $N_{BWP}^{size}$.

Optionally, the method in this example is used for configuration only when the flexible subband is configured on the downlink symbol.

For example, when the first subband pattern is the pattern #41, the second signaling includes $L_{RBS,1}$, $L_{RB,1}$, $L_{RBS,3}$, and $L_{RB,3}$, where $L_{RBS,1}$ and $L_{RB,1}$ indicate that all RBs in the first $L_{RBS,1}$ RBSs of the first frequency domain resource and the immediately following $L_{RB,1}$ RBs form the first downlink subband; $L_{RBS,3}$ and $L_{RB,3}$ indicate that all RBs in the last $L_{RBS,3}$ RBSs of the first frequency domain resource and the immediately preceding $L_{RB,3}$ RBs form the second downlink subband; and the remaining RBs in the first frequency domain resource other than the first downlink subband and the second downlink subband form the flexible subband. A quantity of RBs included in each subband in the pattern is greater than or equal to 0 and less than or equal to $N_{BWP}^{size}$.

Optionally, the method in this example is used for configuration only when the downlink subband is configured on the flexible symbol.

For example, when the first subband pattern is the pattern #42, the second signaling includes $S_{RBS,2}$, $L_{RBS,2}$, $L_{RB,2}$, and $L'_{RB,2}$, where $S_{RBS,2}$, $L_{RBS,2}$, $L_{RB,2}$, and $L'_{RB,2}$ indicate that all RBs in $L_{RBS,2}$ RBSs starting from an $S_{RBS,2} + 1^{th}$ RB of the first frequency domain resource, the immediately preceding $L_{RB,2}$ RBs, and the immediately following $L'_{RB,2}$ RBs form the uplink subband; all RBs preceding the uplink subband in the first frequency domain resource form the first flexible subband; and all RBs following the flexible subband in the first frequency domain resource form the second flexible subband. A quantity of RBs included in each subband in the pattern is greater than or equal to 0 and less than or equal to $N_{BWP}^{size}$.

Optionally, the method in this example is used for configuration only when the uplink subband is configured on the flexible symbol.

For example, when the first subband pattern is the pattern #42, the second signaling includes $L_{RBS,1}$, $L_{RB,1}$, $L_{RBS,3}$, and $L_{RB,3}$, where $L_{RBS,1}$ and $L_{RB,1}$ indicate that all RBs in the first $L_{RBS,1}$ RBSs of the first frequency domain resource and the immediately following $L_{RB,1}$ RBs form the first flexible subband; $L_{RBS,3}$ and $L_{RB,3}$ indicate that all RBs in the last $L_{RBS,3}$ RBSs of the first frequency domain resource and the immediately preceding $L_{RB,3}$ RBs form the second flexible subband; and the remaining RBs in the first frequency domain resource other than the first flexible subband and the second flexible subband form the uplink subband. A quantity of RBs included in each subband in the pattern is greater than or equal to 0 and less than or equal to $N_{BWP}^{size}$.

Optionally, the method in this example is used for configuration only when the flexible subband is configured on the uplink symbol.

It should be understood that, in the foregoing example, $L_{RB,1}$, $L_{RB,3}$, $L_{RB,2}$, and $L'_{RB,2}$ are greater than 0 and less than K, and K is a quantity of RBs included in one RBS.

S420: The network device sends the first signaling and the second signaling to the terminal device. Correspondingly, the terminal device receives the first signaling and the second signaling from the network device.

Optionally, the first signaling and the second signaling are cell-level broadcast signaling. For example, the first signaling and the second signaling are carried in a system information block 1 (system information block 1, SIB 1) message. For example, the first signaling and the second signaling are carried in an RRC message.

S430: The terminal device determines the transmission direction of the first time frequency resource based on the first subband pattern.

It may be understood that, the terminal device determines a transmission direction of a second time frequency resource based on a transmission direction of a second time unit, where the second time frequency resource is a time frequency resource including one frequency unit in the first frequency domain resource and the second time unit, and the second time unit is any time unit outside the first time unit set.

It may also be understood that, a priority of a transmission direction that is of a frequency unit and that is indicated by the first subband pattern in the first time unit is higher than a priority of a transmission direction of the first time unit, and a priority of a transmission direction that is of a frequency unit and that is indicated by the first subband pattern in the second time unit is lower than a priority of a transmission direction of the first time unit.

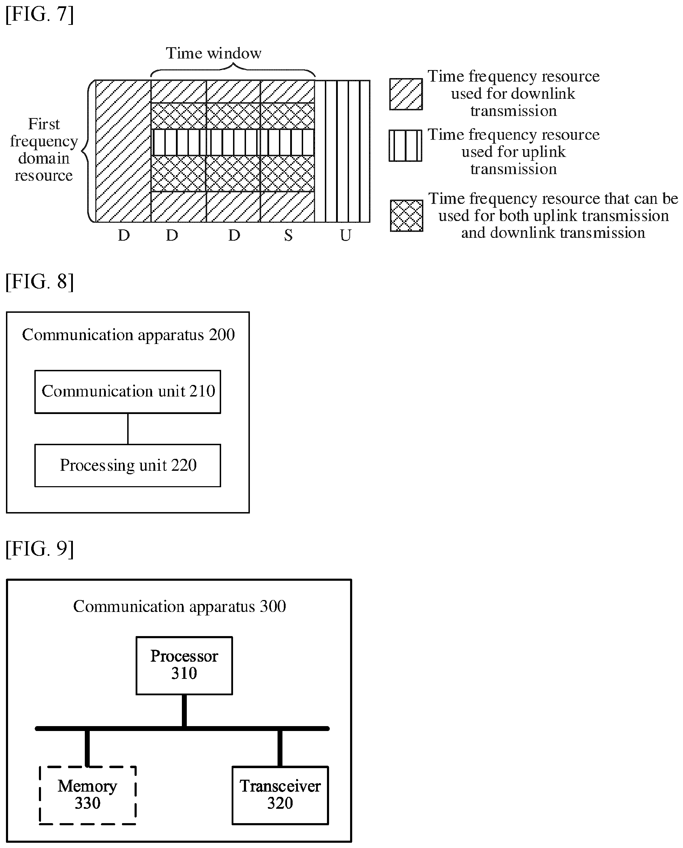

For example, as shown in FIG. 7, the first slot configuration periodicity includes five slots, and the five slots are configured as DDDSU through the cell-level uplink-downlink slot configuration signaling. D is a downlink slot, U is an uplink slot (that is, a transmission direction of the slot U is uplink), S is a special slot, the slot S includes flexible symbols, symbols in the slot D are downlink symbols, transmission directions of the downlink symbols are downlink, and symbols in the slot U are uplink symbols, transmission directions of the uplink symbols are uplink, and transmission directions of the flexible symbols are flexible (which may be used for both uplink transmission and downlink transmission). The first time unit set indicated by the first signaling includes three slots, namely, DDS corresponding to a time window in FIG. 7, the first subband pattern indicated by the second signaling is the pattern 4, and the first downlink subband, the first flexible subband, the first uplink subband, the second flexible subband, and the second downlink subband exist in the pattern 4. In this case, as shown in FIG. 7, a transmission direction of any symbol (namely, a $1^{st}$ slot and a last slot) in a slot outside the time window and a transmission direction of a time frequency resource corresponding to the first frequency domain resource are the same as a transmission direction of the symbol, and a transmission direction of any symbol in a slot in the time window and the transmission direction of the time frequency resource corresponding to the first frequency domain resource are determined based on the first subband pattern.

It can be learned that, in this technical solution, the flexible frequency unit that is capable of being used for both uplink transmission and downlink transmission is introduced in the first frequency domain resource through the first subband pattern, so that the terminal device can adaptively use the flexible frequency unit for the uplink transmission and the downlink transmission in the first time unit set based on statuses of an uplink service and a downlink service, to improve flexibility of an SBFD system and use efficiency of a frequency resource.

It should be understood that, in practice, a transmission direction of a frequency unit that is in a flexible subband in the first frequency domain resource and that is determined based on the first subband pattern may also be updated based on an actual requirement. Optionally, the method further includes:

S440: The network device sends third signaling to the terminal device.

The third signaling indicates a second subband pattern, the second subband pattern is used to update a transmission direction of a frequency unit included in a first frequency unit set, and the first frequency unit set includes a frequency unit that corresponds to the flexible frequency unit in the first frequency domain resource and that is determined based on the first subband pattern. Correspondingly, the terminal device receives the third signaling from the network device.

Optionally, the second subband pattern may be used to update a transmission direction of one or more frequency units included in the first frequency unit set.

Optionally, the network device configures the first time unit set and the second time unit set through the first signaling, and configures the subband pattern #1 and the subband pattern #2 through the second signaling. The time domain resource range in which the subband pattern #1 takes effect is the time unit in the first time unit set, and the time domain resource range in which the subband pattern #2 takes effect is the time unit in the second time unit set. In this step, the network device may further configure two second subband patterns through the third signaling, which are respectively applied to one or more frequency units that correspond to a flexible frequency unit in the first frequency domain resource and that are determined based on the subband pattern #1, and are applied to one or more frequency units that correspond to a flexible frequency unit in the first frequency domain resource and that are determined based on the subband pattern #2.

Optionally, the third signaling is UE-level unicast signaling or UE-level broadcast signaling.

Because the first subband pattern may be configured at the granularity of the RB, or may be configured at the granularity of the RBS, the second subband pattern may also be configured at two granularities. The following specifically describes the second subband pattern.

(1) Configure the second subband pattern at the granularity of the RB

A configuration manner of the second subband pattern is the same as that of the first subband pattern. For the second subband pattern, only the first frequency domain resource in the pattern 1 to the pattern 4 that are configured at the granularity of the RB in the first subband pattern needs to be replaced with the first frequency unit set (namely, the flexible subband). In other words, the transmission direction of the frequency unit (or the subband) in the flexible subband is configured based on the second subband pattern.

It should be noted that, when the second subband pattern is configured at the granularity of the RB, if only one flexible subband exists in the first frequency domain resource, the network device needs to include, in the third signaling, only one second subband pattern and parameter information of a location of each subband determined based on the second subband pattern. For a specific configuration manner of the parameter information, refer to the foregoing descriptions about the second signaling. If two first frequency unit sets (namely, two flexible subbands) exist in the first frequency domain resource, the network device may configure, in the third signaling, one second subband pattern for each flexible subband, and configure the parameter information for determining the location of each subband based on the second subband pattern. For example, in this implementation, the third signaling is carried in the RRC message, or the third signaling is carried in a DCI message.

Optionally, the third signaling may further indicate time unit indexes of one or more time units in the first time unit set. In this case, the second subband pattern is only applied to the time units corresponding to these time unit indexes. In this way, different subband configurations in the plurality of time units can be supported. For example, in this implementation, the third signaling is carried in the DCI message, or the third signaling is carried in the RRC message.

(2) Configure the second subband pattern at the granularity of the RBS

The third signaling includes a plurality of groups of information, and each group of information includes an index of one RBS and one second subband pattern. The second subband pattern is used to reconfigure a transmission direction of a flexible RB in an RBS corresponding to the RBS index. The second subband pattern indicates that all frequency units in the first frequency domain resource are uplink frequency units, or the second subband pattern indicates that all frequency units in the first frequency domain resource are downlink frequency units, or the second subband pattern is the pattern 2, the pattern 3, or the pattern 4 in S410. For the second subband pattern, only the first frequency domain resource in the pattern 2 to the pattern 4 that are configured at the granularity of the RBS in the first subband pattern needs to be replaced with one RBS, and the RBS is an RBS in which a flexible RB in the first frequency unit set is located.

For example, in this scenario, the third signaling is carried in the RRC message, or the third signaling is carried in a DCI message.

For example, the second subband pattern in each group of information may be replaced with an RBS format (format). It should be understood that, the RBS format indicates a transmission direction of each RB included in one RBS. The transmission direction of the flexible RB in the RBS corresponding to the RBS index may be determined based on the corresponding RBS format. For example, in this implementation, the third signaling is carried in the DCI message.

The following describes a possible RBS format by using an example in which one RBS includes eight RBs. For example, a possible RBS format is shown in Table 1.

Table 1

| 0  | U | U | U | U | U | U | U | U |
|----|---|---|---|---|---|---|---|---|
| 1  | D | D | D | D | D | D | D | D |
| 2  | U | U | U | U | U | U | U | F |
| 3  | U | U | U | U | U | U | F | F |
| 4  | U | U | U | U | F | F | F | F |
| 5  | U | U | F | F | F | F | F | F |
| 6  | U | F | F | F | F | F | F | F |
| 7  | F | F | F | F | F | F | F | U |
| 8  | F | F | F | F | F | F | U | U |
| 9  | F | F | F | F | U | U | U | U |
| 10 | F | F | U | U | U | U | U | U |
| 11 | F | U | U | U | U | U | U | U |

(continued)

| 12 | D | D | D | D | D | D | D | F |
|----|---|---|---|---|---|---|---|---|
| 13 | D | D | D | D | D | D | F | F |
| 14 | D | D | D | D | F | F | F | F |
| 15 | D | D | F | F | F | F | F | F |
| 16 | D | F | F | F | F | F | F | F |
| 17 | F | F | F | F | F | F | F | D |
| 18 | F | F | F | F | F | F | D | D |
| 19 | F | F | F | F | D | D | D | D |
| 20 | F | F | D | D | D | D | D | D |
| 21 | F | D | D | D | D | D | D | D |
| 22 | D | F | F | F | F | F | F | U |
| 23 | D | F | F | F | F | F | U | U |
| 24 | D | F | F | F | U | U | U | U |
| 25 | D | F | U | U | U | U | U | U |
| 26 | D | D | F | F | F | F | F | U |
| 27 | D | D | F | F | F | F | U | U |
| 28 | D | D | F | F | U | U | U | U |
| 29 | D | D | D | D | F | F | F | U |
| 30 | D | D | D | D | F | F | U | U |
| 31 | D | D | D | D | D | D | F | U |
| 32 | U | F | F | F | F | F | F | D |
| 33 | U | F | F | F | F | F | D | D |
| 34 | U | F | F | F | D | D | D | D |
| 35 | U | F | D | D | D | D | D | D |
| 36 | U | U | F | F | F | F | F | D |
| 37 | U | U | F | F | F | F | D | D |
| 38 | U | U | F | F | D | D | D | D |
| 39 | U | U | U | U | F | F | F | D |
| 40 | U | U | U | U | F | F | U | D |
| 41 | U | U | U | U | U | U | F | D |
| ... | ... | ... | ... | ... | ... | ... | ... | ... |

A first column in Table 1 is an index in the RBS format. Each row in Table 1 indicates transmission directions of eight RBs included in one RBS. U indicates that an RB at a corresponding location is an uplink RB, D indicates that an RB at a corresponding location is a downlink RB, and F indicates that an RB at a corresponding location is a flexible RB. The transmission direction of the flexible RB in the RBS index is determined based on the index in the RBS format in Table 1.

It should be noted that, after the first subband pattern is configured, if only some RBs in one RBS are flexible RBs, the terminal device can modify transmission directions of the flexible RBs in the RBS only based on an RBS format corresponding to the RBS, and remaining uplink or downlink RBs are not reconfigured.

It may be understood that, Table 1 merely provides several possible RBS formats as an example, and Table 1 may further include another RBS format. This is not limited in this application.

Optionally, each group of information included in the third signaling may further include time unit indexes of one or more time units in the first time unit set. In this case, the second subband pattern or the RBS format is only applied to the time units corresponding to these time unit indexes. In this way, different subband configurations in the plurality of time units can be supported. For example, in this implementation, the third signaling is carried in the DCI message.

S450: The terminal device updates a transmission direction of a third time frequency resource based on the second subband pattern. The third time frequency resource is a time frequency resource including one frequency unit in the first frequency unit set and the first time unit, and the first time unit is a time unit in the first time unit set.

It should be understood that, in practice, the first time unit set may be updated based on an actual requirement. In this case, optionally, the method further includes:

S460: The network device sends fourth signaling to the terminal device, where the fourth signaling is used to update the first time unit set to a third time unit set. Correspondingly, the terminal device receives the fourth signaling from the network device.

It should be understood that, in subsequent subband configuration, the terminal device considers that the first subband pattern takes effect only in the updated third time unit set, and does not take effect in the first time unit set.

Optionally, the fourth signaling may alternatively indicate the third time unit set in the foregoing time window or bitmap manner. Details are not described herein again.

Optionally, the fourth signaling is UE-level unicast signaling or UE-level broadcast signaling.

Optionally, the third time unit set includes one or more time units. Descriptions are provided below by using examples.

For example, the fourth signaling is carried in the RRC. In a possible implementation, when the first signaling indicates that the first time unit set includes flexible symbols in a slot configuration periodicity, and the fourth signaling is UE-level uplink-downlink slot configuration signaling, namely, tdd-UL-DL-ConfigurationDedicated of the terminal device, the third time unit set may be understood as a time unit set in which the time units in the first time unit set are still flexible time units after the fourth signaling is configured.

For example, the fourth signaling is carried in the DCI. In a possible implementation, when the first signaling is the cell-level uplink-downlink slot configuration signaling, the first time unit set includes flexible symbols in a slot configuration periodicity, the fourth signaling is a DCI format 2_0, namely, an SFI, and the fourth signaling modifies only the flexible symbols in the first time unit set. In this case, the third time unit set may be understood as a time unit set in which the time units in the first time unit set are still flexible time units after the fourth signaling is configured.

For example, the fourth signaling is carried in the DCI or the RRC. In a possible implementation, the fourth signaling may update the first time unit set to the third time unit set in a time window manner in S410. In another possible implementation, the fourth signaling may update the first time unit set to the third time unit set in a bitmap indication manner in S410.

Optionally, the third time unit set is an empty set. It may be understood that, when the third time unit is the empty set, the first subband pattern does not take effect in a time domain resource, that is, TDD is enabled, to implement dynamic switching between SBFD and the TDD, and improve flexibility of an SBFD system. For example, when interference is severe, a TDD mode can be dynamically switched to, to reduce interference and improve system reliability. When interference is not severe, an SBFD mode can be dynamically switched to, to improve uplink and downlink frequency resource utilization and system efficiency. Descriptions are provided below by using examples.

For example, the fourth signaling is carried in the DCI. In a possible implementation, the fourth signaling may update the first time unit set to the empty set in a time window manner in S410. In another possible implementation, the fourth signaling may update the first time unit set to the empty set in a bitmap indication manner in S410.

S470: The terminal device determines a transmission direction of a fourth time frequency resource based on a transmission direction of a third time unit, and determines a transmission direction of a fifth time frequency resource based on the first subband pattern.

The fourth time frequency resource is a time frequency resource including the third time unit and one frequency resource of the first time domain resource, the third time unit is a time unit outside the third time unit set, and the fifth time frequency resource is a time frequency resource including a time unit in the third time unit set and one frequency resource in the first time domain resource.

It should be understood that, in the first time unit set, a transmission direction of a time frequency resource corresponding to the flexible frequency unit is determined by a scheduling direction. Specifically, when an uplink signal is scheduled on the time frequency resource, the time frequency resource is used for uplink transmission. If a downlink signal is scheduled on the time frequency resource, the time frequency resource is used for downlink transmission. The following describes a use condition of the time frequency resource in a subsequent scheduling process after the first time unit set is configured based on the first subband pattern by using an example.

Optionally, the method further includes S480 and/or S490.

S480: The network device sends fifth signaling to the terminal device, where the fifth signaling indicates the terminal device to send a first signal on a time frequency resource #1 including a fifth time unit set and a fifth frequency unit set in the first frequency domain resource. Correspondingly, the terminal device receives the fifth signaling from the network device.

Optionally, all time units in the fifth time unit set may be located in the first time unit set, or may be located outside the first time unit set, or some time units may be located in the first time unit set, and some time units may be located outside the first time unit set.

It should be understood that, because it is indicated that the first signal is sent on the time frequency resource #1, when the time units in the fifth time unit set are located outside the first time unit set, the fifth time unit set is not expected to include a downlink time unit; or if the fifth time unit set includes a downlink time unit, the first signal is completely discarded; or if the fifth time unit set includes a downlink time unit, the first signal that overlaps with the downlink time unit is discarded. In addition, when the fifth time unit set includes the flexible time unit, a time frequency resource including the flexible time unit and the fifth frequency unit set is used for uplink transmission.

It should be understood that, because it is indicated that the first signal is sent on the time frequency resource #1, when the time units in the fifth time unit set are located in the first time unit set, the fifth frequency unit set is not expected to include a downlink frequency unit, or if the fifth frequency unit set includes a downlink frequency unit, the first signal is completely discarded; or if the fifth frequency unit set includes a downlink frequency unit, the first signal that overlaps with the downlink frequency unit is discarded. **In** addition, when the fifth frequency unit set includes the flexible frequency unit, a time frequency resource including the fifth time unit and the flexible frequency unit in the first frequency unit set is used for uplink transmission.

S490: The network device sends sixth signaling to the terminal device, where the sixth signaling indicates the terminal device to receive a second signal on a time frequency resource #2 including a sixth time unit set and a sixth frequency unit set in the first frequency domain resource. Correspondingly, the terminal device receives the fifth signaling from the network device.

Optionally, all time units in the sixth time unit set may be located in the first time unit set, or may be located outside the first time unit set, or some time units may be located in the first time unit set, and some time units may be located outside the first time unit set.

It should be understood that, because it is indicated that the second signal is received on the time frequency resource #2, when the time units in the sixth time unit set are located outside the first time unit set, the sixth time unit set is not expected to include an uplink time unit; or if the sixth time unit set includes an uplink time unit, the first signal is completely discarded; or if the sixth time unit set includes an uplink time unit, the first signal that overlaps with the uplink time unit is discarded. In addition, when the sixth time unit set includes the flexible time unit, a time frequency resource including the flexible time unit and the sixth frequency unit set is used for downlink transmission.

It should be understood that, because it is indicated that the second signal is received on the time frequency resource #2, when the time units in the sixth time unit set are located in the first time unit set, the sixth frequency unit set is not expected to include an uplink frequency unit; or if the sixth frequency unit set includes an uplink frequency unit, the first signal is completely discarded; or if the sixth frequency unit set includes an uplink frequency unit, the first signal that overlaps with the uplink frequency unit is discarded. In addition, when the sixth frequency unit set includes the flexible frequency unit, a time frequency resource including the sixth time unit and the flexible frequency unit in the first frequency unit set is used for downlink transmission.

It should be understood that, because the frequency unit set scheduled by the network device in S480 or S490 may be some resources on the flexible subband, optionally, a flexible frequency unit that is not scheduled on the flexible subband may be further used for a guard band. The following describes a possible configuration manner by using an example.

For example, the frequency units that are located in the flexible subband and that are not scheduled form the guard band, and the network device does not need to indicate a location and a length of the guard band to the terminal device. The terminal device determines the location of the guard band based on a location of the flexible subband and a scheduling status.

For example, the network device notifies the terminal device of the length of the guard band through a message #1 (for example, the message #1 is a SIB 1 message, an RRC message, or a DCI message). The guard band is located on two sides of the flexible subband. If uplink transmission is scheduled on the flexible subband, the guard band is located on one side of the flexible subband close to the downlink subband. If downlink transmission is scheduled on the flexible subband, the guard band is located on one side of the flexible subband close to the uplink subband. If no transmission is scheduled on the flexible subband, the guard band is located in the middle of the flexible subband, or the guard band is the entire flexible subband (in this case, the length of the guard band is not a length indicated by the network device). In this case, during scheduling, the terminal device is not expected to send and receive a signal on the guard band. In other words, during scheduling, the network device needs to avoid scheduling uplink transmission and downlink transmission on the guard band.

For example, the network device notifies the terminal device of the location and the length of the guard band on the flexible subband through a message #2 (for example, the message #2 is a SIB 1 message, an RRC message, or a DCI message). In this case, a flexible subband between the guard band and the downlink subband can be used only for downlink transmission, and a flexible subband between the guard band and the uplink subband can be used only for uplink transmission.

Optionally, the guard band may be independent of the flexible subband. In this case, the network device may configure the guard band on the first frequency domain resource, and the terminal device may perform subband configuration on a remaining frequency domain resource part of the first frequency domain resource other than the guard band based on the first subband pattern indicated by the network device. The guard band is located at boundaries of different types of subbands. It may be understood that, subbands in embodiments of this application include an uplink subband, a downlink subband, and a flexible subband. Optionally, in this application, the second signaling may further indicate a length of the guard band, or the second signaling may further indicate a start location and a length of the guard band.

It should be noted that, lengths of the guard band at the boundaries of the different types of subbands may be the same or may be different. This is not limited in this application.

The following specifically describes, with reference to the pattern #41 and the pattern #31, how to indicate the guard band in the first frequency domain resource through the second information.

For example, the second indication information indicates the length of the guard band. When the first subband pattern is the pattern #41, the second signaling includes $S_{RB,2}$, $L_{RB,2}$, L1, and L2, where $S_{RB,2}$ and $L_{RB,2}$ indicate that a total of $L_{RB,2}$ RBs starting from an $S_{RB,2}$ + $1^{th}$ RB of the first frequency domain resource to an $S_{RB,2}$ + $L_{RB,2}^{th}$ RB of the first frequency domain resource form the flexible subband. L1 indicates that L1 RBs immediately preceding the flexible subband form a guard band #1 between the first downlink subband and the flexible subband, that is, RBs starting from an $S_{RB,2}$ - $L1+1^{th}$ RB of the first frequency domain resource to an $S_{RB,2}^{th}$ RB of the first frequency domain resource form the guard band #1. L2 indicates that L2 RBs immediately following the flexible subband form a guard band #2 between the flexible subband and the second downlink subband, that is, RBs starting from an $S_{RB,2}$ + $L_{RB,2}$ + $1^{th}$ RB of the first frequency domain resource to an $S_{RB,2}$ + $L_{RB,2}$ + $L2^{th}$ RB of the first frequency domain resource form the guard band #2. RBs starting from a start RB of the first frequency domain resource to a last RB located before the guard band #1 in the first frequency domain resource form the first downlink subband, that is, RBs starting from the start RB of the first frequency domain resource to an $S_{RB,2}$ - $L1^{th}$ RB of the first frequency domain resource form the first downlink subband. RBs starting from a $1^{st}$ RB located after the guard band #2 in the first frequency domain resource to a last RB of the first frequency domain resource form the second downlink subband, that is, RBs starting from an $S_{RB,2}$ + $L_{RB,2}$ + L2 + $1^{th}$ RB of the first frequency domain resource to the last RB of the first frequency domain resource form the second downlink subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

For example, the second indication information indicates the length and the start location of the guard band. When the first subband pattern is the pattern #41, the second signaling includes $S_{RB,2}$, $L_{RB,2}$, S1, S2, L1, and L2, where $S_{RB,2}$ and $L_{RB,2}$ indicate that a total of $L_{RB,2}$ RBs starting from an $S_{RB,2}$ + $1^{th}$ RB of the first frequency domain resource to an $S_{RB,2}$ + $L_{RB,2}^{th}$ RB of the first frequency domain resource form the flexible subband. S1 and L1 indicate location information of the guard band #1 between the first downlink subband and the flexible subband, that is, RBs starting from an S1 + $1^{th}$ RB of the first frequency domain resource to an S1+L1$^{th}$ RB of the first frequency domain resource form the guard band #1. S2 and L2 indicate location information of the guard band #2 between the flexible subband and the second downlink subband, that is, RBs starting from an S2 + $1^{th}$ RB of the first frequency domain resource to an S2+L2$^{th}$ RB of the first frequency domain resource form the guard band #2. RBs starting from a start RB of the first frequency domain resource to a last RB located before the guard band #1 in the first frequency domain resource form the first downlink subband, that is, RBs starting from the start RB of the first frequency domain resource to an S1$^{th}$ RB of the first frequency domain resource form the first downlink subband. RBs starting from a $1^{st}$ RB located after the guard band #2 in the first frequency domain resource to a last RB of the first frequency domain resource form the second downlink subband, that is, RBs starting from an S2+L2+1$^{th}$ RB of the first frequency domain resource to the last RB of the first frequency domain resource form the second downlink subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

It should be noted that, in this example, a $1^{st}$ RB of the guard band #1 and a last RB of the first downlink subband are adjacent RBs, a last RB of the guard band #1 and a $1^{st}$ RB of the flexible subband are adjacent RBs, a $1^{st}$ RB of the guard band #2 and a last RB of the flexible subband are adjacent RBs, and a last RB of the guard band #2 and a $1^{st}$ RB of the second downlink subband are adjacent RBs.

For example, the second indication information indicates the length of the guard band. When the first subband pattern is the pattern #41, the second signaling includes $L_{RB,1}$, $L_{RB,3}$, L1, and L2, where $L_{RB,1}$ indicates that the first $L_{RB,1}$ RBs of the first frequency domain resource form the first downlink subband. L1 indicates that L1 RBs immediately following the first downlink subband form a guard band #1 between the first downlink subband and the flexible subband, that is, RBs starting from an $L_{RB,1}$ + $1^{th}$ RB of the first frequency domain resource to an $L_{RB,1}$+L1$^{th}$ RB of the first frequency domain resource form the guard band #1. $L_{RB,3}$ indicates that the last $L_{RB,3}$ RBs of the first frequency domain resource form the second downlink subband, that is, RBs starting from $N_{BWP}^{size} - L_{RB,3} + 1$ RBs of the first frequency domain resource to the last RB of the first frequency domain resource form the second downlink subband. L2 indicates that L2 RBs immediately preceding the second downlink subband form a guard band #2 between the flexible subband and the second downlink subband, that is, RBs starting from an $N_{BWP}^{size} - L_{RB,3} - L2 + 1^{th}$ RB of the first frequency domain resource to an $N_{BWP}^{size} - L_{RB,3}{}^{th}$ RB of the first frequency domain resource form the guard band #2. All the remaining RBs in the first frequency domain resource form the flexible subband, that is, RBs starting from an $L_{RB,1}$+L1+1$^{th}$ RB of the first frequency domain resource to an $N_{BWP}^{size} - L_{RB,3} - L2^{th}$ RB of the first frequency domain resource form the flexible subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

For example, the second indication information indicates the length and the start location of the guard band, and the second signaling includes $L_{RB,1}$, $L_{RB,3}$, S1, S2, L1, and L2, where $L_{RB,1}$ indicates that the first $L_{RB,1}$ RBs of the first frequency domain resource form the first downlink subband. S1 and L1 indicate location information of the guard band #1 between the first downlink subband and the flexible subband, that is, RBs starting from an S1+1$^{th}$ RB of the first frequency domain resource to an S1 +L1$^{th}$ RB of the first frequency domain resource form the guard band #1. $L_{RB,3}$ indicates that the last $L_{RB,3}$ RBs of the first frequency domain resource form the second downlink subband, that is, RBs starting from $N_{BWP}^{size} - L_{RB,3} + 1$ RBs of the first frequency domain resource to the last RB of the first frequency domain resource form the second downlink subband. S2 and L2 indicate location information of the guard band #2 between the flexible subband and the second downlink subband, that is, RBs starting from an S2+1$^{th}$ RB of the first frequency domain resource to an S2+L2$^{th}$ RB of the first frequency domain resource form the guard band #2. All the remaining RBs in the first frequency domain resource are the flexible subband, that is, RBs starting from an S1+L1+1$^{th}$ RB of the first frequency domain resource to an S2$^{th}$ RB of the first frequency domain resource form the flexible subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

It should be noted that, in this example, a 1$^{st}$ RB of the guard band #1 and a last RB of the first downlink subband are adjacent RBs, a last RB of the guard band #1 and a 1$^{st}$ RB of the flexible subband are adjacent RBs, a 1$^{st}$ RB of the guard band #2 and a last RB of the flexible subband are adjacent RBs, and a last RB of the guard band #2 and a 1$^{st}$ RB of the second downlink subband are adjacent RBs.

Optionally, lengths of L1 and L2 in the foregoing example may be the same or may be different. When the lengths of L1 and L2 are the same, only L1 or L2 may be configured. Alternatively, if only L1 is configured, it is considered that L2 is equal to L1; or if only L2 is configured, it is considered that L1 is equal to L2.

For example, the second indication information indicates the length of the guard band, and when the first subband pattern is the pattern #31, the second signaling includes $L_{RB,1}$ and L1, where $L_{RB,1}$ indicates that the first $L_{RB,1}$ RBs of the first frequency domain resource form the first flexible subband. L1 indicates that L1 RBs immediately following the first flexible subband form a guard band #1 between the first downlink subband and the first flexible subband, that is, a total of L1 RBs starting from an $L_{RB,1}$+1$^{th}$ RB of the first frequency domain resource to an $L_{RB,1}$+L1$^{th}$ RB of the first frequency domain resource form the guard band #1 between the first downlink subband and the first flexible subband. The remaining RBs in the first frequency domain resource form the first downlink subband, that is, RBs starting from an $L_{RB,1}$+L1+1$^{th}$ RB of the first frequency domain resource to the last RB of the first frequency domain resource form the first downlink subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

For example, the second indication information indicates the length and the start location of the guard band. When the first subband pattern is the pattern #31, the second signaling includes $L_{RB,1}$, S1, and L1, where $L_{RB,1}$ indicates that the first $L_{RB,1}$ RBs of the first frequency domain resource form the first flexible subband. S1 and L1 indicate location information of the guard band #1 between the first downlink subband and the first flexible subband, that is, RBs starting from an S1+1$^{th}$ RB of the first frequency domain resource to an S1+L1$^{th}$ RB of the first frequency domain resource form the guard band #1. The remaining RBs in the first frequency domain resource form the first downlink subband, that is, RBs starting from an S1+L1+1$^{th}$ RB of the first frequency domain resource to the last RB of the first frequency domain resource form the first downlink subband. A quantity of RBs included in each subband in the pattern is greater than or equal to 0 and less than or equal to $N_{BWP}^{size}$, and $N_{BWP}^{size}$ is a quantity of RBs included in the first frequency domain resource.

It should be noted that, in this example, a 1$^{st}$ RB of the guard band #1 and a last RB of the first flexible subband are adjacent RBs, and a last RB of the guard band #1 and a 1$^{st}$ RB of the first downlink subband are adjacent RBs.

For example, the second indication information indicates the length of the guard band. When the first subband pattern is the pattern #31, the second signaling includes $L_{RB,1}$ and L1, where $L_{RB,1}$ indicates that the last $L_{RB,1}$ RBs of the first frequency domain resource form the first downlink subband, that is, RBs starting from the $N_{BWP}^{size} - L_{RB,1} + 1$ RBs of the first frequency domain resource to the last RB of the first frequency domain resource form the first downlink subband. L1 indicates that L1 RBs immediately preceding the first downlink subband form a guard band #1 between the first downlink subband and the first flexible subband, that is, RBs starting from an $N_{BWP}^{size} - L_{RB,1} - L1 + 1^{th}$ RB of the first frequency domain resource to an $N_{BWP}^{size} - L_{RB,1}^{th}$ RB of the first frequency domain resource form the guard band #1. All the remaining RBs in the first frequency domain resource form the first flexible subband, that is, RBs starting from an $N_{BWP}^{size} - L_{RB,1} + 1^{th}$ RB of the first frequency domain resource to the last RB of the first frequency domain resource form the first downlink subband. $N_{BWP}^{size}$ is a quantity of RBs included in the first frequency domain resource.

For example, the second indication information indicates the length and the start location of the guard band. When the first subband pattern is the pattern #31, the second signaling includes $L_{RB,1}$, S1, and L1, where $L_{RB,1}$ indicates that the last $L_{RB,1}$ RBs of the first frequency domain resource form the first downlink subband, that is, RBs starting from the $N_{BWP}^{size} - L_{RB,1} + 1$ RBs of the first frequency domain resource to the last RB of the first frequency domain resource form the first downlink subband. S1 and L1 indicate location information of the guard band #1 between the first downlink subband and the first flexible subband, that is, RBs starting from an S1+1th RB of the first frequency domain resource to an S1+L1th RB of the first frequency domain resource form the guard band #1. All the remaining RBs in the first frequency domain resource form the first flexible subband, that is, the first $N_{BWP}^{size} - L_{RB,1} - L1$ RBs of the first frequency domain resource form the first downlink flexible. $N_{BWP}^{size}$ is a quantity of RBs included in the first frequency domain resource.

It should be noted that, in this example, a 1st RB of the guard band #1 and a last RB of the first flexible subband are adjacent RBs, and a last RB of the guard band #1 and a 1st RB of the first downlink subband are adjacent RBs.

It should be understood that, for a method for configuring the guard band in another pattern, refer to the foregoing descriptions. Details are not described herein again.

It should be further understood that, the method provided in this application is also applicable to a subband overlapping full duplex (subband overlapping full duplex, SBFD) system.

It should be noted that, the first frequency domain resource in this application is not limited to a bandwidth part (bandwidth part, BWP). Therefore, in this application, $N_{BWP}^{size}$ may also be replaced with $N_{RB}$, and $N_{RB}$ indicates a quantity of RBs included in the first frequency domain resource. For example, the first frequency domain resource may also be an operating band (operating band), a channel bandwidth (channel bandwidth), a transmission frequency band (transmission bandwidth), a transmission bandwidth configuration (transmission bandwidth configuration), or the like. For a specific definition, refer to the protocol 3GPP TS 38.101.

It should be understood that sequence numbers of the foregoing processes do not mean execution sequences. The execution sequence of the processes should be determined based on functions and internal logic of the processes, and should not be construed as any limitation on implementation processes of embodiments of this application.

It should be further understood that, in embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by a device (for example, the terminal device or the network device) may also be implemented by a component (for example, a chip or a circuit) of the device.

The foregoing describes in detail the method provided in embodiments of this application with reference to FIG. 1 and FIG. 7. The foregoing methods are mainly described from a perspective of interaction between the terminal device and the network device. It may be understood that, to implement the foregoing functions, the terminal device and the network device include corresponding hardware structures and/or software modules for performing the functions.

A person skilled in the art may be aware that, with reference to the examples described in embodiments disclosed in this specification, units and algorithm steps can be implemented by hardware or a combination of computer software and hardware in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

The following describes in detail communication apparatuses provided in embodiments of this application with reference to FIG. 8 and FIG. 9. It should be understood that descriptions of apparatus embodiments correspond to the descriptions of the method embodiments. Therefore, for content that is not described in detail, refer to the foregoing method embodiments. For brevity, some content is not described again. In embodiments of this application, functional modules of the terminal device or the network device may be obtained through division based on the foregoing method examples. For example, functional modules may be obtained through division in correspondence to functions, or two or more functions may be integrated into one processing module. The integrated module may be implemented in a form of hardware, or may be implemented in a form of a software functional module. It should be noted that, in embodiments of this application, module division is an example, and is merely a logical function division. In actual implementation, another division manner may be used. An example in which each functional module is obtained through division based on each corresponding function is used below for description.

The foregoing describes in detail the data transmission method provided in this application, and the following describes communication apparatuses provided in this application. In a possible implementation, the apparatus is configured to implement the steps or procedures corresponding to the receive end device in the foregoing method embodiments. In another possible implementation, the apparatus is configured to implement the steps or procedures corresponding to the transmit end device in the foregoing method embodiments.

FIG. 8 is a block diagram of a communication apparatus 200 according to an embodiment of this application. As shown in FIG. 8, the apparatus 200 may include a communication unit 210 and a processing unit 220. The communication unit 210 may communicate with an external device, and the processing unit 220 is configured to process data. The communication unit 210 may also be referred to as a communication interface or a transceiver unit.

In a possible design, the apparatus 200 may implement steps or procedures performed by the transmit end device in the foregoing method embodiments. The processing unit 220 is configured to perform processing-related operations of the transmit end device in the foregoing method embodiments, and the communication unit 210 is configured to perform sending-related operations of the transmit end device in the foregoing method embodiments.

In another possible design, the apparatus 200 may implement steps or procedures performed by the receive end device in the foregoing method embodiments. The communication unit 210 is configured to perform receiving-related operations of the receive end device in the foregoing method embodiments, and the processing unit 220 is configured to perform processing-related operations of the receive end device in the foregoing method embodiments.

It should be understood that the apparatus 200 herein is embodied in a form of a functional unit. The term "unit" herein may refer to an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 200 may be specifically the transmit end device in the foregoing embodiments, and may be configured to perform procedures and/or steps corresponding to the transmit end device in the foregoing method embodiments. Alternatively, the apparatus 200 may be specifically the receive end device in the foregoing embodiments, and may be configured to perform procedures and/or steps corresponding to the receive end device in the foregoing method embodiments. To avoid repetition, details are not described herein again.

The apparatus 200 in each of the foregoing solutions has functions of implementing corresponding steps performed by the transmit end device in the foregoing method, or the apparatus 200 in each of the foregoing solutions has functions of implementing corresponding steps performed by the receive end device in the foregoing method. The function may be implemented by hardware, or may be implemented by hardware executing corresponding software. The hardware or software includes one or more modules corresponding to the foregoing function. For example, the communication unit may be replaced with a transceiver (for example, a sending unit of the communication unit may be replaced with a transmitter, and a receiving unit of the communication unit may be replaced with a receiver), and another unit such as the processing unit may be replaced with a processor, to separately perform the sending/receiving operations and the processing-related operations in the method embodiments.

In addition, alternatively, the communication unit may be a transceiver circuit (for example, may include a receiving circuit and a sending circuit), and the processing unit may be a processing circuit. In this embodiment of this application, the apparatus in FIG. 8 may be the AP or the STA in the foregoing embodiments, or may be a chip or a chip system, for example, a system-on-chip (system-on-chip, SoC). The communication unit may be an input/output circuit or a communication interface. The processing unit is a processor, a microprocessor, or an integrated circuit integrated on the chip. This is not limited herein.

FIG. 9 is a block diagram of a communication apparatus 300 according to an embodiment of this application. The apparatus 300 includes a processor 310 and a transceiver 320. The processor 310 and the transceiver 320 communicate with each other through an internal connection path, and the processor 310 is configured to execute instructions, to control the transceiver 320 to send a signal and/or receive a signal.

Optionally, the apparatus 300 may further include a memory 330. The memory 330 communicates with the processor 310 and the transceiver 320 through internal connection paths. The memory 330 is configured to store instructions, and the processor 310 may execute the instructions stored in the memory 330. In a possible implementation, the apparatus 300 is configured to implement procedures and steps corresponding to the transmit end device in the foregoing method embodiments. In another possible implementation, the apparatus 300 is configured to implement procedures and steps corresponding to the receive end device in the foregoing method embodiments.

It should be understood that the apparatus 300 may be specifically the transmit end device or the receive end device in the foregoing embodiments, or may be a chip or a chip system. Correspondingly, the transceiver 320 may be a transceiver circuit of the chip. This is not limited herein. Specifically, the apparatus 300 may be configured to perform steps and/or procedures corresponding to the transmit end device or the receive end device in the foregoing method embodiments. Optionally, the memory 330 may include a read-only memory and a random access memory, and provide instructions and data for the processor. A part of the memory may further include a non-volatile random access memory. For example, the memory may further store information of a device type. The processor 310 may be configured to execute the instructions stored in the memory; and when the processor 310 executes the instructions stored in the memory, the processor 310 is configured to perform steps and/or procedures corresponding to the transmit end device or the receive end device in the foregoing method embodiments.

In an implementation process, steps in the foregoing methods can be implemented by using a hardware integrated logical circuit in the processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor in embodiments of this application may implement or perform the methods, the steps, and the logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM). It should be noted that the memory of the systems and methods described in this specification includes but is not limited to these memories and any memory of another proper type.

It should be noted that when the processor is a general-purpose processor, a DSP, an ASIC, an FPGA or another programmable logic device, a discrete gate or a transistor logic device, or a discrete hardware component, the memory (storage module) may be integrated into the processor.

In addition, this application further provides a computer-readable storage medium. The computer-readable storage medium stores computer instructions. When the computer instructions are run on a computer, operations and/or procedures performed by the terminal device or the network device in the method embodiments of this application are performed.

This application further provides a computer program product. The computer program product includes computer program code or instructions. When the computer program code or the instructions are run on a computer, operations and/or procedures performed by the terminal device or the network device in the method embodiments of this application are performed.

In addition, this application further provides a chip, and the chip includes a processor. A memory configured to store a computer program is disposed independent of the chip. The processor is configured to execute the computer program stored in the memory, so that an operation and/or processing performed by the terminal device or the network device in any method embodiment is performed.

Further, the chip may include a communication interface. The communication interface may be an input/output interface, an interface circuit, or the like. Further, the chip may include the memory.

In addition, this application further provides a communication system. The communication system includes the terminal device and the network device in embodiments of this application.

It should be further noted that the memory described herein is intended to include, but not limited to, these memories and any memory of another proper type.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed operating process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms. The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the current technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

It should be understood that, an "embodiment" mentioned throughout this specification means that particular features, structures, or characteristics related to this embodiment are included in at least one embodiment of this application. Therefore, embodiments in the entire specification do not necessarily refer to a same embodiment. In addition, these particular features, structures, or characteristics may be combined in one or more embodiments in any proper manner.

It should be further understood that ordinal numbers such as "first" and "second" in embodiments of this application are for distinguishing between a plurality of objects, but are not intended to limit a size, content, an order, a time sequence, priorities, importance of the plurality of objects, or the like. For example, first information and second information do not indicate a difference in an information amount, content, a priority, importance, or the like.

It should be further understood that, in this application, both "when" and "if" mean that a network element performs corresponding processing in an objective situation, but do not constitute a limitation on time, do not require that the network element has a determining action during implementation, and do not mean other limitations either.

It should be further understood that in this application, "at least one" means one or more, and "a plurality of" means two or more. "At least one item (piece) of the following" or a similar expression thereof means any combination of these items, including any combination of singular items (pieces) or plural items (pieces). For example, at least one of a, b, or c may represent a, b, c, a and b, a and c, b and c, or a, b, and c.

It should be further understood that, unless otherwise specified, a meaning similar to "an item includes one or more of the following: A, B, and C" in this application usually means that the item may be any one of the following: A; B; C; A and B; A and C; B and C; A, B and C; A and A; A, A and A; A, A and B; A, A and C; A, B and B; A, C and C; B and B, B, B and B, B, B and C, C and C; C, C and C, and other combinations of A, B, and C. The foregoing uses three elements A, B, and C as an example to describe an optional case of the item. When an expression is "an item includes at least one of the following: A, B, ..., and X", in other words, more elements are included in the expression, a case to which the item is applicable may also be obtained according to the foregoing rule.

It should be further understood that a term "and/or" in this specification describes only an association relationship between associated objects and indicates that three relationships may exist. For example, A and/or B may indicate the following three cases: Only A exists, both A and B exist, and only B exists, where A and B may be singular or plural. The character "/" generally indicates an "or" relationship between the associated objects. For example, A/B indicates A or B.

It should be further understood that in embodiments of this application, "B corresponding to A" indicates that B is associated with A, and B may be determined based on A. However, it should be further understood that determining B based on A does not mean that B is determined based only on A. B may alternatively be determined based on A and/or other information.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A subband configuration method, applied to a terminal device, and comprising:

   receiving first signaling and second signaling from a network device, wherein the first signaling indicates a first time unit set, the second signaling indicates a first subband pattern, the first subband pattern indicates a transmission direction of a frequency unit comprised in a first frequency domain resource, and the first frequency domain resource comprises one or more flexible frequency units, wherein the flexible frequency units are capable of being used for both uplink transmission and downlink transmission, and the first frequency domain resource is a frequency unit set configured by the network device for the terminal device; and
   determining a transmission direction of a first time frequency resource based on the first subband pattern, wherein the first time frequency resource is a time frequency resource comprising one frequency unit in the first frequency domain resource and a first time unit, and the first time unit is any time unit in the first time unit set.

2. The method according to claim 1, wherein the method further comprises:
   determining a transmission direction of a second time frequency resource based on a transmission direction of a second time unit, wherein the second time frequency resource is a time frequency resource comprising one frequency unit in the first frequency domain resource and the second time unit, and the second time unit is any time unit outside the first time unit set.

3. The method according to claim 1 or 2, wherein

   the first subband pattern indicates that all frequency units in the first frequency domain resource are flexible frequency units;
   the first subband pattern indicates that the first frequency domain resource comprises at most one downlink subband, one flexible subband, and one uplink subband, wherein the downlink subband is located at a start location of the first frequency domain resource, the uplink subband is located at an end location of the first frequency domain resource, and the flexible subband is located between the downlink subband and the uplink subband;
   the first subband pattern indicates that the first frequency domain resource comprises at most one uplink subband, one flexible subband, and one downlink subband, wherein the uplink subband is located at a start location of the first frequency domain resource, the downlink subband is located at an end location of the first frequency domain resource, and the flexible subband is located between the downlink subband and the uplink subband; or

the first subband pattern indicates that the first frequency domain resource comprises at most a first downlink subband, a first flexible subband, a first uplink subband, a second flexible subband, and a second downlink subband, wherein the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband, wherein

all frequency units in an uplink subband are uplink frequency units, all frequency units in a downlink subband are downlink frequency units, and all frequency units in a flexible subband are flexible frequency units.

4. The method according to any one of claims 1 to 3, wherein

the first subband pattern indicates that the first frequency domain resource comprises only one downlink subband and one flexible subband; or

the first subband pattern indicates that the first frequency domain resource comprises only one flexible subband and one uplink subband.

5. The method according to any one of claims 1 to 3, wherein

the first subband pattern indicates that the first frequency domain resource comprises only one flexible subband and one downlink subband; or

the first subband pattern indicates that the first frequency domain resource comprises only one uplink subband and one flexible subband.

6. The method according to any one of claims 1 to 3, wherein
the first subband pattern indicates that the first frequency domain resource comprises only a first downlink subband, a flexible subband, and a second downlink subband, wherein the flexible subband is located between the first downlink subband and the second downlink subband; or
the first subband pattern indicates that the first frequency domain resource comprises only a first flexible subband, an uplink subband, and a second flexible subband, wherein the uplink subband is located between the first flexible subband and the second flexible subband.

7. The method according to any one of claims 3 to 6, wherein transmission directions of all frequency units in one flexible subband in the first frequency domain resource are the same.

8. The method according to any one of claims 3 to 7, wherein the second signaling further comprises location information that is of each of one or more subbands in the first frequency domain resource and that is determined based on the first subband pattern.

9. The method according to claim 8, wherein the second signaling further comprises location information of at least one guard band, and the guard band is located between different types of subbands in the first frequency domain resource.

10. The method according to any one of claims 1 to 9, wherein the method further comprises:
receiving third signaling from the network device, wherein the third signaling indicates a second subband pattern, the second subband pattern is used to update a transmission direction of a frequency unit comprised in a first frequency unit set, and the first frequency unit set comprises a frequency unit that corresponds to the flexible frequency unit in the first frequency domain resource and that is determined based on the first subband pattern; and
updating a transmission direction of a third time frequency resource based on the second subband pattern, wherein the third time frequency resource is a time frequency resource comprising one frequency unit in the first frequency unit set and the first time unit.

11. The method according to any one of claims 1 to 10, wherein the first time unit set is comprised in a first time period, and the first time period is repeated by using a length of the first time period as a periodicity.

12. The method according to claim 11, wherein the first time unit set comprises all flexible time units in the first time period.

13. The method according to claim 11, wherein the first signaling comprises a location of a start time unit in the first time unit set in the first time period and a quantity of time units comprised in the first time unit set.

14. The method according to claim 11, wherein the first signaling comprises a first bitmap, bits comprised in the first bitmap are in one-to-one correspondence with time units in the first time period, and the first time unit set comprises a time unit corresponding to a bit whose bit value is a first value in the first bitmap.

15. The method according to any one of claims 11 to 14, wherein the first time period is a time period corresponding to a first slot configuration periodicity, and the first slot configuration periodicity is one slot configuration periodicity comprised in cell-level uplink-downlink slot configuration signaling used by the terminal device.

16. The method according to any one of claims 11 to 14, wherein each of the first time periods that are periodically repeated comprises one first time unit set.

17. The method according to any one of claims 11 to 14, wherein M first time periods in every N first time periods in the first time periods that are periodically repeated each comprise one first time unit set, and $1 \leq M < N$.

18. The method according to any one of claims 1 to 17, wherein the method further comprises:
receiving fourth signaling from the network device, wherein the fourth signaling is used to update the first time unit set to a third time unit set, the third time unit set is an empty set, and the first subband pattern takes effect in the third time unit set and does not take effect in the first time unit set; and
determining a transmission direction of a fourth time frequency resource based on a transmission direction of a third time unit, wherein the fourth time frequency resource is a time frequency resource comprising the third time unit and one frequency resource in the first time domain resource, and the third time unit is any time unit outside the third time unit set.

19. A subband configuration method, applied to a network device, and comprising:
determining first signaling and second signaling, wherein the first signaling indicates a first time unit set, the second signaling indicates a first subband pattern, the first subband pattern indicates a transmission direction of a frequency unit comprised in a first frequency domain resource set, and the first frequency domain resource comprises one or more flexible frequency units, wherein the flexible frequency units are capable of being used for both uplink transmission and downlink transmission, the first frequency domain resource is a frequency unit set configured by the network device for a terminal device, the first subband pattern is used to determine a transmission direction of a first time frequency resource, the first time frequency resource is a time frequency resource comprising one frequency unit in the first frequency domain resource and a first time unit, and the first time unit is any time unit in the first time unit set; and
sending the first signaling and the second signaling to the terminal device.

20. The method according to claim 19, wherein

the first subband pattern indicates that all frequency units in the first frequency domain resource are flexible frequency units;
the first subband pattern indicates that the first frequency domain resource comprises at most one downlink subband, one flexible subband, and one uplink subband, wherein

the downlink subband is located at a start location of the first frequency domain resource, the uplink subband is located at an end location of the first frequency domain resource, and the flexible subband is located between the downlink subband and the uplink subband;
the first subband pattern indicates that the first frequency domain resource comprises at most one uplink subband, one flexible subband, and one downlink subband, wherein the uplink subband is located at a start location of the first frequency domain resource, the downlink subband is located at an end location of the first frequency domain resource, and the flexible subband is located between the downlink subband and the uplink subband; or
the first subband pattern indicates that the first frequency domain resource comprises at most a first downlink subband, a first flexible subband, a first uplink subband, a second flexible subband, and a second downlink subband, wherein the first downlink subband is located at a start location of the first frequency domain resource, the second downlink subband is located at an end location of the first frequency domain resource, the first flexible subband is located between the first downlink subband and the first uplink subband, and the

34

second flexible subband is located between the first uplink subband and the second downlink subband, wherein

all frequency units in an uplink subband are uplink frequency units, all frequency units in a downlink subband are downlink frequency units, and all frequency units in a flexible subband are flexible frequency units.

21. The method according to claim 19 or 20, wherein

the first subband pattern indicates that the first frequency domain resource comprises only one downlink subband and one flexible subband; or
the first subband pattern indicates that the first frequency domain resource comprises only one flexible subband and one uplink subband.

22. The method according to claim 19 or 20, wherein
the first subband pattern indicates that the first frequency domain resource comprises only one flexible subband and one downlink subband; or
the first subband pattern indicates that the first frequency domain resource comprises only one uplink subband and one flexible subband.

23. The method according to claim 19 or 20, wherein
the first subband pattern indicates that the first frequency domain resource comprises only a first downlink subband, a flexible subband, and a second downlink subband, wherein the flexible subband is located between the first downlink subband and the second downlink subband; or
the first subband pattern indicates that the first frequency domain resource comprises only a first flexible subband, an uplink subband, and a second flexible subband.

24. The method according to any one of claims 20 to 23, wherein transmission directions of all frequency units in one flexible subband in the first frequency domain resource are the same.

25. The method according to any one of claims 20 to 24, wherein the second signaling further comprises location information that is of each of one or more subbands in the first frequency domain resource and that is determined based on the first subband pattern.

26. The method according to claim 25, wherein the second signaling further comprises location information of at least one guard band, and the guard band is located between different types of subbands in the first frequency domain resource.

27. The method according to any one of claims 19 to 26, wherein the method further comprises:
sending third signaling to the terminal device, wherein the third signaling indicates a second subband pattern, the second subband pattern indicates a transmission direction of a frequency unit comprised in a first frequency unit set, the first frequency unit set comprises a frequency unit that corresponds to the flexible frequency unit in the first frequency domain resource and that is determined based on the first subband pattern, the second subband pattern is used to update a transmission direction of a third time frequency resource, and the third time frequency resource is a time frequency resource comprising one frequency unit in the first frequency unit set and the first time unit.

28. The method according to any one of claims 19 to 27, wherein the first time unit set is comprised in a first time period, and the first time period is repeated by using a length of the first time period as a periodicity.

29. The method according to claim 28, wherein the first time unit set comprises all flexible time units in the first time period.

30. The method according to claim 28, wherein the first signaling comprises a location of a start time unit in the first time unit set in the first time period and a quantity of time units comprised in the first time unit set.

31. The method according to claim 28, wherein the first signaling comprises a first bitmap, bits comprised in the first bitmap are in one-to-one correspondence with time units in the first time period, and the first time unit set comprises a time unit corresponding to a bit whose bit value is a first value in the first bitmap.

32. The method according to any one of claims 28 to 31, wherein the first time period is a time period corresponding to a first slot configuration periodicity, and the first slot configuration periodicity is one slot configuration periodicity comprised in cell-level uplink-downlink slot configuration signaling used by the terminal device.

33. The method according to any one of claims 28 to 32, wherein each of the first time periods that are periodically repeated comprises one first time unit set.

34. The method according to any one of claims 28 to 32, wherein M first time periods in every N first time periods in the first time periods that are periodically repeated each comprise one first time unit set, and $1 \leq M < N$.

35. The method according to any one of claims 19 to 34, wherein the method further comprises:
sending fourth signaling to the terminal device, wherein the fourth signaling is used to update the first time unit set to a third time unit set, the third time unit set is an empty set, and the first subband pattern takes effect in the third time unit set and does not take effect in the first time unit set.

36. A communication apparatus, comprising:
a communication unit, configured to receive first signaling and second signaling from a network device, wherein the first signaling indicates a first time unit set, the second signaling indicates a first subband pattern, the first subband pattern indicates a transmission direction of a frequency unit comprised in a first frequency domain resource, and the first frequency domain resource comprises one or more flexible frequency units, wherein the flexible frequency units are capable of being used for both uplink transmission and downlink transmission, and the first frequency domain resource is a frequency unit set configured by the network device for a terminal device; and
a processing unit, configured to determine a transmission direction of a first time frequency resource based on the first subband pattern, wherein the first time frequency resource is a time frequency resource comprising one frequency unit in the first frequency domain resource and the first time unit, and the first time unit is any time unit in the first time unit set.

37. The communication apparatus according to claim 36, wherein the processing unit is further configured to determine a transmission direction of a second time frequency resource based on a transmission direction of a second time unit, wherein the second time frequency resource is a time frequency resource comprising one frequency unit in the first frequency domain resource and the second time unit, and the second time unit is any time unit outside the first time unit set.

38. The communication apparatus according to claim 36 or 37, wherein

the first subband pattern indicates that all frequency units in the first frequency domain resource are flexible frequency units;
the first subband pattern indicates that the first frequency domain resource comprises at most one downlink subband, one flexible subband, and one uplink subband, wherein the downlink subband is located at a start location of the first frequency domain resource, the uplink subband is located at an end location of the first frequency domain resource, and the flexible subband is located between the downlink subband and the uplink subband;

the first subband pattern indicates that the first frequency domain resource comprises at most one uplink subband, one flexible subband, and one downlink subband, wherein the uplink subband is located at a start location of the first frequency domain resource, the downlink subband is located at an end location of the first frequency domain resource, and the flexible subband is located between the downlink subband and the uplink subband; or

the first subband pattern indicates that the first frequency domain resource comprises at most a first downlink subband, a first flexible subband, a first uplink subband, a second flexible subband, and a second downlink subband, wherein the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband, wherein all frequency units in an uplink subband are uplink frequency units, all frequency units in a downlink subband are downlink frequency units, and all frequency units in a flexible subband are flexible frequency units.

39. The communication apparatus according to any one of claims 36 to 38, wherein

the first subband pattern indicates that the first frequency domain resource comprises only one downlink subband and one flexible subband; or

the first subband pattern indicates that the first frequency domain resource comprises only one flexible subband and one uplink subband.

40. The communication apparatus according to any one of claims 36 to 38, wherein
the first subband pattern indicates that the first frequency domain resource comprises only one flexible subband and one downlink subband; or
the first subband pattern indicates that the first frequency domain resource comprises only one uplink subband and one flexible subband.

41. The communication apparatus according to any one of claims 36 to 38, wherein

the first subband pattern indicates that the first frequency domain resource comprises only a first downlink subband, a flexible subband, and a second downlink subband, wherein the flexible subband is located between the first downlink subband and the second downlink subband; or
the first subband pattern indicates that the first frequency domain resource comprises only a first flexible subband, an uplink subband, and a second flexible subband.

42. The communication apparatus according to any one of claims 38 to 41, wherein transmission directions of all frequency units in one flexible subband in the first frequency domain resource are the same.

43. The communication apparatus according to any one of claims 38 to 42, wherein the second signaling further comprises location information that is of each of one or more subbands in the first frequency domain resource and that is determined based on the first subband pattern.

44. The communication apparatus according to claim 43, wherein the second signaling further comprises location information of at least one guard band, and the guard band is located between different types of subbands in the first frequency domain resource.

45. The communication apparatus according to any one of claims 36 to 44, wherein

the communication unit is further configured to receive third signaling from the network device, wherein the third signaling indicates a second subband pattern, the second subband pattern is used to update a transmission direction of a frequency unit comprised in a first frequency unit set, and the first frequency unit set comprises a frequency unit that corresponds to the flexible frequency unit in the first frequency domain resource and that is determined based on the first subband pattern; and
the processing unit is further configured to update a transmission direction of a third time frequency resource based on the second subband pattern, wherein the third time frequency resource is a time frequency resource comprising one frequency unit in the first frequency unit set and the first time unit.

46. The communication apparatus according to any one of claims 36 to 45, wherein the first time unit set is comprised in a first time period, and the first time period is repeated by using a length of the first time period as a periodicity.

47. The communication apparatus according to claim 46, wherein the first time unit set comprises all flexible time units in the first time period.

48. The communication apparatus according to claim 46, wherein the first signaling comprises a location of a start time unit in the first time unit set in the first time period and a quantity of time units comprised in the first time unit set.

49. The communication apparatus according to claim 46, wherein the first signaling comprises a first bitmap, bits comprised in the first bitmap are in one-to-one correspondence with time units in the first time period, and the first time unit set comprises a time unit corresponding to a bit whose bit value is a first value in the first bitmap.

50. The communication apparatus according to any one of claims 46 to 49, wherein the first time period is a time period corresponding to a first slot configuration periodicity, and the first slot configuration periodicity is one slot configuration periodicity comprised in cell-level uplink-downlink slot configuration signaling used by the terminal device.

51. The communication apparatus according to any one of claims 46 to 50, wherein each of the first time periods that are periodically repeated comprises one first time unit set.

52. The communication apparatus according to any one of claims 46 to 50, wherein M first time periods in every N first time periods in the first time periods that are periodically repeated each comprise one first time unit set, and 1≤M<N.

53. The communication apparatus according to any one of claims 36 to 52, wherein
the communication unit is further configured to receive fourth signaling from the network device, wherein the fourth signaling is used to update the first time unit set to a third time unit set, the third time unit set is an empty set, and the first subband pattern takes effect in the third time unit set and does not take effect in the first time unit set; and
the processing unit is further configured to determine a transmission direction of a fourth time frequency resource based on a transmission direction of a third time unit, wherein the fourth time frequency resource is a time frequency resource comprising the third time unit and one frequency resource in the first time domain resource, and the third time unit is any time unit outside the third time unit set.

54. A communication apparatus, comprising:

a processing unit, configured to determine first signaling and second signaling, wherein the first signaling indicates a first time unit set, the second signaling indicates a first subband pattern, the first subband pattern indicates a transmission direction of a frequency unit comprised in a first frequency domain resource set, and the first frequency domain resource comprises one or more flexible frequency units, wherein the flexible frequency units are capable of being used for both uplink transmission and downlink transmission, the first frequency domain resource is a frequency unit set configured by a network device for a terminal device, the first subband pattern is used to determine a transmission direction of a first time frequency resource, the first time frequency resource is a time frequency resource comprising one frequency unit in the first frequency domain resource and a first time unit, and the first time unit is any time unit in the first time unit set; and
a communication unit, configured to send the first signaling and the second signaling to the terminal device.

55. The communication apparatus according to claim 54, wherein

the first subband pattern indicates that all frequency units in the first frequency domain resource are flexible frequency units;
the first subband pattern indicates that the first frequency domain resource comprises at most one downlink subband, one flexible subband, and one uplink subband, wherein the downlink subband is located at a start location of the first frequency domain resource, the uplink subband is located at an end location of the first frequency domain resource, and the flexible subband is located between the downlink subband and the uplink subband;
the first subband pattern indicates that the first frequency domain resource comprises at most one uplink subband, one flexible subband, and one downlink subband, wherein the uplink subband is located at a start location of the first frequency domain resource, the downlink subband is located at an end location of the first frequency domain resource, and the flexible subband is located between the downlink subband and the uplink subband; or
the first subband pattern indicates that the first frequency domain resource comprises at most a first downlink subband, a first flexible subband, a first uplink subband, a second flexible subband, and a second downlink subband, wherein the first downlink subband is located at a start location of the first frequency domain resource, the second downlink subband is located at an end location of the first frequency domain resource, the first flexible subband is located between the first downlink subband and the first uplink subband, and the second flexible subband is located between the first uplink subband and the second downlink subband, wherein all frequency units in an uplink subband are uplink frequency units, all frequency units in a downlink subband are downlink frequency units, and all frequency units in a flexible subband are flexible frequency units.

56. The communication apparatus according to claim 54 or 55, wherein

the first subband pattern indicates that the first frequency domain resource comprises only one downlink subband and one flexible subband; or
the first subband pattern indicates that the first frequency domain resource comprises only one flexible subband and one uplink subband.

57. The communication apparatus according to claim 54 or 55, wherein

the first subband pattern indicates that the first frequency domain resource comprises only one flexible subband and one downlink subband; or

the first subband pattern indicates that the first frequency domain resource comprises only one uplink subband and one flexible subband.

58. The communication apparatus according to claim 54 or 55, wherein

the first subband pattern indicates that the first frequency domain resource comprises only a first downlink subband, a flexible subband, and a second downlink subband, wherein the flexible subband is located between the first downlink subband and the second downlink subband; or

the first subband pattern indicates that the first frequency domain resource comprises only a first flexible subband, an uplink subband, and a second flexible subband.

59. The communication apparatus according to any one of claims 55 to 58, wherein transmission directions of all frequency units in one flexible subband in the first frequency domain resource are the same.

60. The communication apparatus according to any one of claims 55 to 59, wherein the second signaling further comprises location information that is of each of one or more subbands in the first frequency domain resource and that is determined based on the first subband pattern.

61. The communication apparatus according to claim 60, wherein the second signaling further comprises location information of at least one guard band, and the guard band is located between different types of subbands in the first frequency domain resource.

62. The communication apparatus according to any one of claims 54 to 61, wherein the communication unit is further configured to send third signaling to the terminal device, wherein the third signaling indicates a second subband pattern, the second subband pattern indicates a transmission direction of a frequency unit comprised in a first frequency unit set, the first frequency unit set comprises a frequency unit that corresponds to the flexible frequency unit in the first frequency domain resource and that is determined based on the first subband pattern, the second subband pattern is used to update a transmission direction of a third time frequency resource, and the third time frequency resource is a time frequency resource comprising one frequency unit in the first frequency unit set and the first time unit.

63. The communication apparatus according to any one of claims 54 to 62, wherein the first time unit set is comprised in a first time period, and the first time period is repeated by using a length of the first time period as a periodicity.

64. The communication apparatus according to claim 63, wherein the first time unit set comprises all flexible time units in the first time period.

65. The communication apparatus according to claim 63, wherein the first signaling comprises a location of a start time unit in the first time unit set in the first time period and a quantity of time units comprised in the first time unit set.

66. The communication apparatus according to claim 63, wherein the first signaling comprises a first bitmap, bits comprised in the first bitmap are in one-to-one correspondence with time units in the first time period, and the first time unit set comprises a time unit corresponding to a bit whose bit value is a first value in the first bitmap.

67. The communication apparatus according to any one of claims 63 to 66, wherein the first time period is a time period corresponding to a first slot configuration periodicity, and the first slot configuration periodicity is one slot configuration periodicity comprised in cell-level uplink-downlink slot configuration signaling used by the terminal device.

68. The communication apparatus according to any one of claims 63 to 67, wherein each of the first time periods that are periodically repeated comprises one first time unit set.

69. The communication apparatus according to any one of claims 63 to 67, wherein M first time periods in every N first time periods in the first time periods that are periodically repeated each comprise one first time unit set, and $1 \leq M < N$.

70. The communication apparatus according to any one of claims 54 to 69, wherein
the communication unit is further configured to send fourth signaling to the terminal device, wherein the fourth signaling is used to update the first time unit set to a third time unit set, the third time unit set is an empty set, and the first subband pattern takes effect in the third time unit set and does not take effect in the first time unit set.

71. A communication apparatus, wherein the communication apparatus comprises at least one processor and at least one memory, the at least one memory is configured to store a computer program or instructions, and the at least one processor is configured to execute the computer program or the instructions in the memory, to perform the method according to any one of claims 1 to 18 or the method according to any one of claims 19 to 35.

72. A computer-readable storage medium, wherein the computer-readable storage medium stores computer instructions; and when the computer instructions are run on a computer, the method according to any one of claims 1 to 18 or the method according to any one of claims 19 to 35 is performed.

73. A computer program product, wherein the computer program product comprises computer program code; and when the computer program code is run on a computer, the method according to any one of claims 1 to 18 or the method according to any one of claims 19 to 35 is performed.

[FIG. 1]

Network
device 110

Terminal
device 120

Terminal
device 130

[FIG. 2]

Frequency
domain

Time frequency
resource used for
downlink transmission

Time frequency
resource used for
uplink transmission

Time frequency
resource used for
uplink transmission

Subband full
duplex slot

Uplink
slot

Time
domain

[FIG. 3(a)]

[FIG. 3(b)]

[FIG. 3(c)]

[FIG. 4]

| Network device | | Terminal device |
| --- | --- | --- |

S410: Determine first signaling and second signaling

S420: First signaling and second signaling

S430: Determine a transmission direction of a first time frequency resource based on a first subband pattern

S440: Third signaling

S450: Update a transmission direction of a third time frequency resource based on a second subband pattern

S460: Fourth signaling

S470: Determine a transmission direction of a fourth time frequency resource based on the first subband pattern

[FIG. 5]

10 first time periods          10 first time periods

...

☐ First time period configured as SBFD          ▨ First time period configured as TDD

[FIG. 6]

...

☐ First time period configured as SBFD          ▨ First time period configured as TDD

[FIG. 7]

[FIG. 8]

[FIG. 9]

## INTERNATIONAL SEARCH REPORT

| International application No. |
|---|
| **PCT/CN2023/129189** |

| A. | CLASSIFICATION OF SUBJECT MATTER |
|---|---|
| | H04W 72/0453(2023.01)i |

According to International Patent Classification (IPC) or to both national classification and IPC

| B. | FIELDS SEARCHED |
|---|---|

Minimum documentation searched (classification system followed by classification symbols)

IPC:H04W

Documentation searched other than minimum documentation to the extent that such documents are included in the fields searched

Electronic data base consulted during the international search (name of data base and, where practicable, search terms used)

CNABS; CNTXT; CNKI; VEN; USTXT; EPTXT; WOTXT; 3GPP: 子带, 频域, 配置, 时域, 时隙, 传输, 方向, 灵活, 更新, subband, frequency, configure, time, slot, TTI, transmit, direction, flexible, update, SBFD

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 115175336 A (VIVO COMMUNICATION TECHNOLOGY CO., LTD.) 11 October 2022 (2022-10-11) <br> description, paragraphs [0096]-[0742], and figures 4-17 | 1-73 |
| X | CN 114846886 A (BEIJING XIAOMI MOBILE SOFTWARE CO., LTD.) 02 August 2022 (2022-08-02) <br> description, paragraphs [0081]-[0264] | 1-73 |
| X | CN 114846885 A (BEIJING XIAOMI MOBILE SOFTWARE CO., LTD.) 02 August 2022 (2022-08-02) <br> description, paragraphs [0075]-[0211] | 1-73 |
| A | US 2021377938 A1 (QUALCOMM INC.) 02 December 2021 (2021-12-02) <br> entire document | 1-73 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **17 January 2024** | **20 January 2024** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/129189**

| Patent document cited in search report | | | Publication date (day/month/year) | Patent family member(s) | | | Publication date (day/month/year) |
|---|---|---|---|---|---|---|---|
| CN | 115175336 | A | 11 October 2022 | WO | 2022214013 | A1 | 13 October 2022 |
| CN | 114846886 | A | 02 August 2022 | | None | | |
| CN | 114846885 | A | 02 August 2022 | | None | | |
| US | 2021377938 | A1 | 02 December 2021 | EP | 4158834 | A1 | 05 April 2023 |
| | | | | WO | 2021242931 | A1 | 02 December 2021 |
| | | | | TW | 202147902 | A | 16 December 2021 |

Form PCT/ISA/210 (patent family annex) (July 2022)

**REFERENCES CITED IN THE DESCRIPTION**

**Patent documents cited in the description**

- CN 202211377097

- CN 202310189176